# EUROPEAN PATENT APPLICATION

(11) **EP 4 443 778 A1**
(43) Date of publication of application: **09.10.2024**
(21) Application number: 22909600.3
(22) Date of filing: 17.11.2022
(51) Int. Cl.: H04J 3/16

(54) **SLOT NEGOTIATION AND DEVICE FOR FINE-GRAINED SERVICE IN FLEXIBLE ETHERNET (FLEXE)**

(30) Priority: 24.12.2021 CN 202111602633; 19.01.2022 CN 202210062606
(71) Applicant: Huawei Technologies Co., Ltd., Shenzhen, Guangdong 518129 (CN)
(72) Inventor: YI, Ke, Shenzhen, Guangdong 518129 (CN); YU, Weiwei, Shenzhen, Guangdong 518129 (CN); LI, Wangqian, Shenzhen, Guangdong 518129 (CN)
(74) Representative: Maiwald GmbH
(86) International application number: PCT/CN2022/132534
(87) International publication number: WO 2023/116284

(57) **Abstract**

Embodiments of this application disclose a slot negotiation method for a fine-grain service in a FlexE. A sending apparatus may generate N requests and send the N requests to a receiving apparatus, where N is an integer greater than or equal to 1. The N requests are used to initiate full slots negotiation of the fine-grain service. The N requests carry full sub-slot information of a sub-slot occupied by the fine-grain service, and the full sub-slot information indicates all sub-slots occupied by the fine-grain service. Because the N requests may be used to initiate the full slots negotiation of the fine-grain service, the receiving apparatus and the sending apparatus may perform negotiation based on the N requests and full slotss of the fine-grain service. Therefore, fine-grain slots of the sending apparatus and the receiving apparatus are consistent, and a problem of inconsistent fine-grain slots of the sending apparatus and the receiving apparatus that may exist due to use of an incremental negotiation manner is avoided.

## Description

This application claims priorities to the following patent applications, which are incorporated herein by reference in their entireties:
1. Chinese Patent Application No. 202111602633.6, filed with the China National Intellectual Property Administration on December 24, 2021, and entitled "METHOD AND DEVICE FOR FINE GRAIN FULL NEGOTIATION MECHANISM"; and
2. Chinese Patent Application No. 202210062606.2, filed with the China National Intellectual Property Administration on January 19, 2022, and entitled "SLOT NEGOTIATION AND APPARATUS FOR - FINE GRAIN SERVICE IN FLEXIBLE ETHERNET FLEXE".

### TECHNICAL FIELD

This application relates to the communication field, and in particular, to a slot negotiation and apparatus for a fine-grain service in a flexible Ethernet FlexE.

### BACKGROUND

A flexible Ethernet (Flexible Ethernet, FlexE) technology has an advantage of on-demand and flexible bandwidth allocation, and can meet requirements in network scenarios such as mobile bearers, home broadband, and dedicated access. The FlexE technology may support fine-grain services. In an example, a slot (slot) corresponding to a FlexE large bandwidth may be further divided into a plurality of sub-slots (sub-slot) to carry fine-grain services. The fine-grain service may also be referred to as a fine-grain service.

When a fine-grain service is transmitted between two network devices, fine-grain slots of the two network devices need to be consistent. In an example, the two network devices may perform fine-grain slot negotiation, to enable the fine-grain slots of the two network devices to be consistent.

However, a current fine-grain slot negotiation manner cannot ensure consistency of fine-grain slots of network devices that transmit a fine-grain service. Therefore, a solution is required to resolve the foregoing problem.

### SUMMARY

Embodiments of this application provide a slot negotiation method for a fine-grain service in a FlexE, so that fine-grain slots between two network devices that transmit a fine-grain service can be consistent.

According to a first aspect, an embodiment of this application provides a slot negotiation method for a fine-grain service in a FlexE. The method may be performed by a sending apparatus. In an example, the sending apparatus may generate N requests and send the N requests to a receiving apparatus, where N is an integer greater than or equal to 1. The N requests are used to initiate full slots negotiation of the fine-grain service. The N requests carry full sub-slot information of a sub-slot occupied by the fine-grain service, and the full sub-slot information indicates all sub-slots occupied by the fine-grain service. Because the N requests may be used to initiate the full slots negotiation of the fine-grain service, the receiving apparatus and the sending apparatus may perform negotiation based on the N requests and full slotss of the fine-grain service. Therefore, fine-grain slots of the sending apparatus and the receiving apparatus are consistent, and a problem of inconsistent fine-grain slots of the sending apparatus and the receiving apparatus that may exist due to use of an incremental negotiation manner is avoided.

In a possible implementation, a first request is any one of the N requests. In an example, the first request may include first sub-slot information, and the first sub-slot information is a part of the full sub-slot information of the fine-grain service, in other words, the full sub-slot information includes the first sub-slot information. The first sub-slot information indicates a first sub-slot occupied by the fine-grain service, and the first sub-slot is one of all the sub-slots occupied by the fine-grain service. The sending apparatus sends the first request to the receiving apparatus, and the receiving apparatus may obtain the first sub-slot information based on the first request.

In a possible implementation, the first sub-slot information includes a client identifier and a first sub-slot identifier. The client identifier is used to identify the fine-grain service, and the client identifier may be an ID of a sub-client. The first sub-slot identifier is used to identify the first sub-slot occupied by the fine-grain service, and the first sub-slot identifier may be an ID of the first sub-slot.

In a possible implementation, the first request may be carried in a first base frame overhead corresponding to the fine-grain service. In other words, the sending apparatus may send the first base frame overhead to the receiving apparatus, and the receiving apparatus may parse the first base frame overhead to obtain the first request. Further, the receiving apparatus may obtain the first sub-slot information in the first request.

In a possible implementation, the first request may include first indication information, and the first indication information indicates that the first request is a full slots negotiation request for the fine-grain service. The receiving apparatus may determine, based on the first indication information, to start a full slots negotiation procedure for the fine-grain service.

In a possible implementation, when the first request is carried in the first base frame overhead, the first indication information may be carried in a first field of the first base frame overhead. The first field mentioned herein may be a field that has not been used in the first base frame overhead, and/or the first field may be a field that has been used but some values of which have not been used in the first base frame overhead. In an example, the first field may include one or more of an operation code field, a reserved field, or a GCC field.

In a possible implementation, when the sending apparatus performs full slots negotiation of the fine-grain service with the receiving apparatus by using a plurality of requests, and the first request is not a last request in the plurality of requests, the first request may include second indication information, and the second indication information indicates that the first request is not a last request in the N requests. In this way, in an example, after receiving the first request, the receiving apparatus may determine, based on the second indication information, that the first request is not the last request in the plurality of requests. Therefore, a receive end may continue to receive another request for the full slots negotiation.

In a possible implementation, when the first request is carried in the first base frame overhead, the second indication information may be carried in a second field of the first base frame overhead. The second field mentioned herein may be a field that has not been used in the first base frame overhead, or may be a field (that is, a subsequent LE field) that is defined in the first base frame overhead as a field indicating whether the request is the last request, or the second field may be a field that has been used but some values of which have not been used in the first base frame overhead. In an example, the second field includes the LE field, the reserved field, or the GCC field.

In a possible implementation, when the first request is a last request for the full slots negotiation, the first request may include third indication information, and the third indication information indicates that the first request is a last request in the N requests. In this way, in an example, after receiving the first request, the receiving apparatus may determine, based on the third indication information, that the first request is the last request for the full slots negotiation. Further, in an example, the receiving apparatus may obtain the full sub-slot information for the fine-grain service. In another example, the receiving apparatus may send, to the sending apparatus, a response for the full slots negotiation.

In a possible implementation, similar to the second indication information, when the first request is carried in the first base frame overhead, the third indication information may be carried in a third field of the first base frame overhead, and the third field includes an LE field, the reserved field, or the GCC field.

In a possible implementation, the first request may include a quantity of slots, and the quantity of slots indicates a quantity of all the sub-slots. In an example, the receiving apparatus may determine, based on sub-slot information carried in a received request for the full slots negotiation and the quantity of slots, whether all requests for the full slots negotiation have been successfully received. In another example, the receiving apparatus may determine, based on the quantity of slots and the third indication information, whether a packet loss occurs in the plurality of requests for the full slots negotiation.

In a possible implementation, the N requests include a second request, the second request includes second sub-slot information, the second sub-slot information is used to identify a second sub-slot occupied by the fine-grain service, all the sub-slots include the second sub-slot, and the full sub-slot information includes the second sub-slot information.

In a possible implementation, the second sub-slot information includes the client identifier and a second sub-slot identifier, and the second sub-slot identifier is used to identify the second sub-slot occupied by the fine-grain service.

In a possible implementation, the sending apparatus may receive a response that is sent by the receiving apparatus and that is for the N requests. After receiving the response, the receiving apparatus may continue to perform a subsequent procedure of the full slots negotiation. In an example, after sending the last request in the N requests to the receiving apparatus, the sending apparatus may receive the response sent by the receiving apparatus. In other words, the receiving apparatus may send the response to the sending apparatus after receiving the last request in the N requests. In this way, the sending apparatus may determine, based on the response, that the receiving apparatus has received the last request in the N requests. Further, the sending apparatus may continue to perform the subsequent procedure of the full slots negotiation.

In a possible implementation, the receiving apparatus may include the response in a second base frame overhead corresponding to the fine-grain service, and send the second base frame overhead to the sending apparatus. After receiving the second base frame overhead, the sending apparatus may parse the second base frame overhead to obtain the response, and continue to perform the subsequent procedure of the full slots negotiation.

In a possible implementation, considering that the sending apparatus and the receiving apparatus may perform incremental slot negotiation for the fine-grain service before performing full negotiation for the fine-grain service, to avoid that the sending apparatus mistakenly considers a response for the incremental slot negotiation as the response for the full slots negotiation, the response may include fourth indication information, the response includes the fourth indication information, and the fourth indication information indicates that the response is the response for the full slots negotiation.

In a possible implementation, when the response is carried in the second base frame overhead, the fourth indication information may be carried in a fourth field of the second base frame overhead. Similar to the first field, the fourth field may also be one or more of an operation code field, a reserved field, or a GCC field.

In a possible implementation, after receiving the response, the sending apparatus may send fifth indication information to the receiving apparatus, where the fifth indication information indicates that the full slots negotiation takes effect. In this way, the full slots negotiation for the fine-grain service is completed. The sending apparatus and the receiving apparatus may configure a sub-slot for the fine-grain service based on the full sub-slot information of the fine-grain service, to transmit the fine-grain service by using a new sub-slot configuration.

In a possible implementation, the sending apparatus may include the fifth indication information in a third base frame overhead corresponding to the fine-grain service, and send the third base frame overhead to the receiving apparatus. After receiving the third base frame overhead, the receiving apparatus may parse the third base frame overhead, to obtain the fifth indication information.

In a possible implementation, when the fifth indication information is carried in the third base frame overhead, the fifth indication information may be carried in a fifth field of the third base frame overhead. Similar to the first field, the fifth field may include one or more of an operation code field, a reserved field, or a GCC field.

In a possible implementation, the total quantity of all the sub-slots occupied by the fine-grain service is N. In this case, each of the N requests is used to carry information about one sub-slot. For example, the first request carries the first sub-slot information, and the second request carries the second sub-slot information.

In a possible implementation, the total quantity of all the sub-slots occupied by the fine-grain service is greater than N. In this case, in an example, a part of the N requests is used to carry a plurality of sub-slot identifiers. For example, in addition to the client identifier and the first sub-slot identifier, the first request may further carry a third sub-slot identifier, to indicate that the fine-grain service occupies the first sub-slot and a third sub-slot. For another example, in addition to the client identifier and the second sub-slot identifier, the second request may further carry a fourth sub-slot identifier, to indicate that the fine-grain service occupies the second sub-slot and a fourth sub-slot.

According to a second aspect, an embodiment of this application provides a slot negotiation method for a fine-grain service in a FlexE. The method may be performed by a receiving apparatus. In an example, the receiving apparatus may receive N requests sent by a sending apparatus, where N is an integer greater than or equal to 1. The N requests are used to initiate full slots negotiation of the fine-grain service, the N requests carry full sub-slot information of the fine-grain service, and the full sub-slot information indicates all sub-slots occupied by the fine-grain service. After receiving the N requests, the receiving apparatus may obtain the full sub-slot information of the fine-grain service. It can be learned that, in this embodiment of this application, the receiving apparatus and the sending apparatus may perform negotiation based on the N requests and full slotss of the fine-grain service. Therefore, fine-grain slots of the sending apparatus and the receiving apparatus are consistent, and a problem of inconsistent fine-grain slots of the sending apparatus and the receiving apparatus that may exist due to use of an incremental negotiation manner is avoided.

In a possible implementation, the N requests include a first request, the first request includes first sub-slot information, the first sub-slot information indicates a first sub-slot occupied by the fine-grain service, all the sub-slots include the first sub-slot, and the full sub-slot information includes the first sub-slot information.

In a possible implementation, the first request is carried in a first base frame overhead corresponding to the fine-grain service.

In a possible implementation, the first request includes first indication information, and the first indication information indicates that the first request is a full slots negotiation request for the fine-grain service.

In a possible implementation, the first indication information is carried in a first field of the first base frame overhead corresponding to the fine-grain service, and the first field includes one or more of an operation code field, a reserved field, or a GCC field.

In a possible implementation, the first request includes second indication information, and the second indication information indicates that the first request is not a last request in the N requests.

In a possible implementation, a field includes an LE field, the reserved field, or the GCC field.

In a possible implementation, the first request includes third indication information, and the third indication information indicates that the first request is a last request in the N requests.

In a possible implementation, the third indication information is carried in a third field of the first base frame overhead corresponding to the fine-grain service, and the third field includes an LE field, the reserved field, or the GCC field.

In a possible implementation, the first request includes a quantity of slots, and the quantity of slots indicates a quantity of all the sub-slots.

In a possible implementation, the first sub-slot information includes a client identifier and a first sub-slot identifier, the client identifier is used to identify the fine-grain service, and the first sub-slot identifier is used to identify the first sub-slot occupied by the fine-grain service.

In a possible implementation, the N requests include a second request, the second request includes second sub-slot information, the second sub-slot information is used to identify a second sub-slot occupied by the fine-grain service, all the sub-slots include the second sub-slot, and the full sub-slot information includes the second sub-slot information.

In a possible implementation, the second sub-slot information includes the client identifier and a second sub-slot identifier, and the second sub-slot identifier is used to identify the second sub-slot occupied by the fine-grain service.

In a possible implementation, the method further includes: sending a response for the N requests to the sending apparatus.

In a possible implementation, the response is carried in a second base frame overhead corresponding to the fine-grain service.

In a possible implementation, the response includes fourth indication information, and the fourth indication information indicates that the response is a response for the full slots negotiation.

In a possible implementation, the fourth indication information is carried in a fourth field of the second base frame overhead corresponding to the fine-grain service, and the fourth field includes one or more of an operation code field, a reserved field, or a GCC field.

In a possible implementation, the sending a response for the N requests to the sending apparatus includes: sending the response after receiving the last request in the N requests.

In a possible implementation, the method further includes: after sending the response, receiving fifth indication information sent by the sending apparatus, where the fifth indication information indicates that the full slots negotiation takes effect.

In a possible implementation, the fifth indication information is carried in a third base frame overhead corresponding to the fine-grain service.

In a possible implementation, the fifth indication information is carried in a fifth field of the third base frame overhead corresponding to the fine-grain service, and the fifth field includes one or more of an operation code field, a reserved field, or a GCC field.

In a possible implementation, the total quantity of all the sub-slots occupied by the fine-grain service is N.

In a possible implementation, the total quantity of all the sub-slots occupied by the fine-grain service is greater than N.

According to a third aspect, an embodiment of this application provides a slot negotiation apparatus for a fine-grain service in a flexible Ethernet FlexE. The apparatus is used in a sending apparatus, and the apparatus includes: a processing unit, configured to generate N requests, where the N requests are used to initiate full slots negotiation of the fine-grain service, the N requests carry full sub-slot information of a sub-slot occupied by the fine-grain service, the full sub-slot information indicates all sub-slots occupied by the fine-grain service, and N is an integer greater than or equal to 1; and a sending unit, configured to send the N requests to a receiving apparatus.

In a possible implementation, the N requests include a first request, the first request includes first sub-slot information, the first sub-slot information indicates a first sub-slot occupied by the fine-grain service, all the sub-slots include the first sub-slot, and the full sub-slot information includes the first sub-slot information.

In a possible implementation, the first request is carried in a first base frame overhead corresponding to the fine-grain service.

In a possible implementation, the first request includes first indication information, and the first indication information indicates that the first request is a full slots negotiation request for the fine-grain service.

In a possible implementation, the first indication information is carried in a first field of the first base frame overhead corresponding to the fine-grain service, and the first field includes one or more of an operation code field, a reserved field, or a GCC field.

In a possible implementation, the first request includes second indication information, and the second indication information indicates that the first request is not a last request in the N requests.

In a possible implementation, the second indication information is carried in a second field of the first base frame overhead corresponding to the fine-grain service, and the second field includes an LE field, the reserved field, or the GCC field.

In a possible implementation, the first request includes third indication information, and the third indication information indicates that the first request is a last request in the N requests.

In a possible implementation, the third indication information is carried in a third field of the first base frame overhead corresponding to the fine-grain service, and the third field includes an LE field, the reserved field, or the GCC field.

In a possible implementation, the first request includes a quantity of slots, and the quantity of slots indicates a quantity of all the sub-slots.

In a possible implementation, the first sub-slot information includes a client identifier and a first sub-slot identifier, the client identifier is used to identify the fine-grain service, and the first sub-slot identifier is used to identify the first sub-slot occupied by the fine-grain service.

In a possible implementation, the N requests include a second request, the second request includes second sub-slot information, the second sub-slot information is used to identify a second sub-slot occupied by the fine-grain service, all the sub-slots include the second sub-slot, and the full sub-slot information includes the second sub-slot information.

In a possible implementation, the second sub-slot information includes the client identifier and a second sub-slot identifier, and the second sub-slot identifier is used to identify the second sub-slot occupied by the fine-grain service.

In a possible implementation, the apparatus further includes a receiving unit, configured to receive a response that is sent by the receiving apparatus and that is for the N requests.

In a possible implementation, the response is carried in a second base frame overhead corresponding to the fine-grain service.

In a possible implementation, the response includes fourth indication information, and the fourth indication information indicates that the response is a response for the full slots negotiation.

In a possible implementation, the fourth indication information is carried in a fourth field of the second base frame overhead corresponding to the fine-grain service, and the fourth field includes one or more of an operation code field, a reserved field, or a GCC field.

In a possible implementation, the receiving unit is configured to receive the response after the last request in the N requests is sent to the receiving apparatus.

In a possible implementation, the sending unit is further configured to: after the response is received, send fifth indication information to the receiving apparatus, where the fifth indication information indicates that the full slots negotiation takes effect.

In a possible implementation, the fifth indication information is carried in a third base frame overhead corresponding to the fine-grain service.

In a possible implementation, the fifth indication information is carried in a fifth field of the third base frame overhead corresponding to the fine-grain service, and the fifth field includes one or more of an operation code field, a reserved field, or a GCC field.

In a possible implementation, the total quantity of all the sub-slots occupied by the fine-grain service is N.

In a possible implementation, the total quantity of all the sub-slots occupied by the fine-grain service is greater than N.

According to a fourth aspect, an embodiment of this application provides a slot negotiation apparatus for a fine-grain service in a FlexE. The apparatus is used in a receiving apparatus, and the apparatus includes: a receiving unit, configured to receive N requests sent by a sending apparatus, where the N requests are used to initiate full slots negotiation of the fine-grain service, the N requests carry full sub-slot information of the fine-grain service, the full sub-slot information indicates all sub-slots occupied by the fine-grain service, and N is an integer greater than or equal to 1; and a processing unit, configured to obtain the full sub-slot information.

In a possible implementation, the N requests include a first request, the first request includes first sub-slot information, the first sub-slot information indicates a first sub-slot occupied by the fine-grain service, all the sub-slots include the first sub-slot, and the full sub-slot information includes the first sub-slot information.

In a possible implementation, the first request is carried in a first base frame overhead corresponding to the fine-grain service.

In a possible implementation, the first request includes first indication information, and the first indication information indicates that the first request is a full slots negotiation request for the fine-grain service.

In a possible implementation, the first indication information is carried in a first field of the first base frame overhead corresponding to the fine-grain service, and the first field includes one or more of an operation code field, a reserved field, or a GCC field.

In a possible implementation, the first request includes second indication information, and the second indication information indicates that the first request is not a last request in the N requests.

In a possible implementation, the second indication information is carried in a second field of the first base frame overhead corresponding to the fine-grain service, and the second field includes an LE field, the reserved field, or the GCC field.

In a possible implementation, the first request includes third indication information, and the third indication information indicates that the first request is a last request in the N requests.

In a possible implementation, the third indication information is carried in a third field of the first base frame overhead corresponding to the fine-grain service, and the third field includes an LE field, the reserved field, or the GCC field.

In a possible implementation, the first request includes a quantity of slots, and the quantity of slots indicates a quantity of all the sub-slots.

In a possible implementation, the first sub-slot information includes a client identifier and a first sub-slot identifier, the client identifier is used to identify the fine-grain service, and the first sub-slot identifier is used to identify the first sub-slot occupied by the fine-grain service.

In a possible implementation, the N requests include a second request, the second request includes second sub-slot information, the second sub-slot information is used to identify a second sub-slot occupied by the fine-grain service, all the sub-slots include the second sub-slot, and the full sub-slot information includes the second sub-slot information.

In a possible implementation, the second sub-slot information includes the client identifier and a second sub-slot identifier, and the second sub-slot identifier is used to identify the second sub-slot occupied by the fine-grain service.

In a possible implementation, the apparatus further includes a sending unit, configured to send a response for the N requests to the sending apparatus.

In a possible implementation, the response is carried in a second base frame overhead corresponding to the fine-grain service.

In a possible implementation, the response includes fourth indication information, and the fourth indication information indicates that the response is a response for the full slots negotiation.

In a possible implementation, the fourth indication information is carried in a fourth field of the second base frame overhead corresponding to the fine-grain service, and the fourth field includes one or more of an operation code field, a reserved field, or a GCC field.

In a possible implementation, the sending unit is configured to send the response after the last request in the N requests is received.

In a possible implementation, the receiving unit is further configured to: after the response is sent, receive fifth indication information sent by the sending apparatus, where the fifth indication information indicates that the full slots negotiation takes effect.

In a possible implementation, the fifth indication information is carried in a third base frame overhead corresponding to the fine-grain service.

In a possible implementation, the fifth indication information is carried in a fifth field of the third base frame overhead corresponding to the fine-grain service, and the fifth field includes one or more of an operation code field, a reserved field, or a GCC field.

In a possible implementation, the total quantity of all the sub-slots occupied by the fine-grain service is N.

In a possible implementation, the total quantity of all the sub-slots occupied by the fine-grain service is greater than N.

According to a fifth aspect, this application provides a sending apparatus. The sending apparatus includes a memory and a processor. The memory is configured to store program code, and the processor is configured to run instructions in the program code, to enable the sending apparatus to perform the method according to any one of the first aspect or the implementations of the first aspect.

According to a sixth aspect, this application provides a sending apparatus. The sending apparatus includes a communication interface and a processor. The communication interface is configured to perform sending and receiving operations performed by the sending apparatus in any one of the first aspect or the implementations of the first aspect, and the processor is configured to perform an operation other than the sending and receiving operations performed by the sending apparatus in any one of the first aspect or the implementations of the first aspect.

According to a seventh aspect, this application provides a receiving apparatus. The receiving apparatus includes a memory and a processor. The memory is configured to store program code, and the processor is configured to run instructions in the program code, to enable the receiving apparatus to perform the method according to any one of the second aspect or the implementations of the second aspect.

According to an eighth aspect, this application provides a receiving apparatus. The receiving apparatus includes a communication interface and a processor. The communication interface is configured to perform sending and receiving operations performed by the receiving apparatus in any one of the second aspect or the implementations of the second aspect, and the processor is configured to perform an operation other than the sending and receiving operations performed by the receiving apparatus in any one of the second aspect or the implementations of the second aspect.

According to a ninth aspect, an embodiment of this application provides a computer-readable storage medium, including instructions or a computer program. When the instructions or the computer program is run on a computer, the computer is enabled to perform the method according to any implementation of the first aspect or the method according to any implementation of the second aspect.

According to a tenth aspect, an embodiment of this application provides a computer program product including instructions or a computer program. When the computer program product runs on a computer, the computer is enabled to perform the method according to any implementation of the first aspect or the method according to any implementation of the second aspect.

According to an eleventh aspect, an embodiment of this application provides a communication system. The communication system includes a sending apparatus that performs the method according to any one of the first aspect and the implementations of the first aspect and a receiving apparatus that performs the method according to any one of the second aspect and the implementations of the second aspect.

### BRIEF DESCRIPTION OF DRAWINGS

To describe technical solutions in embodiments of this application or a conventional technology more clearly, the following briefly describes accompanying drawings for describing embodiments or the conventional technology. It is clear that the accompanying drawings in the following descriptions show only some embodiments recorded in this application, and persons of ordinary skill in the art may still derive other drawings from these accompanying drawings without creative efforts.
FIG. 1a is a schematic diagram of a structure of an FGU base frame according to an embodiment of this application;
FIG. 1b is a schematic diagram of a structure of another FGU base frame according to an embodiment of this application;
FIG. 1c is a schematic diagram of a structure of another FGU base frame overhead according to an embodiment of this application;
FIG. 2 is a signaling interaction diagram of fine-grain slot negotiation according to an embodiment of this application;
FIG. 3 is a signaling interaction diagram of a slot negotiation method for a fine-grain service in a FlexE according to an embodiment of this application;
FIG. 4a is a schematic diagram of a structure of a base frame overhead 1 carrying a request 1 according to an embodiment of this application;
FIG. 4b is a schematic diagram of a structure of a base frame overhead 2 carrying a request 2 according to an embodiment of this application;
FIG. 4c is a schematic diagram of a structure of a base frame overhead 3 according to an embodiment of this application;
FIG. 4d is a schematic diagram of a structure of a base frame overhead 4 according to an embodiment of this application;
FIG. 5 is a signaling interaction diagram of another slot negotiation method for a fine-grain service in a FlexE according to an embodiment of this application;
FIG. 6 is a signaling interaction diagram of another slot negotiation method for a fine-grain service in a FlexE according to an embodiment of this application;
FIG. 7 is a schematic diagram of a structure of a slot negotiation apparatus for a fine-grain service in a FlexE according to an embodiment of this application;
FIG. 8 is a schematic diagram of a structure of a slot negotiation apparatus for a fine-grain service in a FlexE according to an embodiment of this application;
FIG. 9 is a schematic diagram of a structure of a communication apparatus according to an embodiment of this application; and
FIG. 10 is a schematic diagram of a structure of a communication apparatus according to an embodiment of this application.

### DESCRIPTION OF EMBODIMENTS

Embodiments of this application provide a slot negotiation method for a fine-grain service in a FlexE, so that fine-grain slots between two network devices that transmit a fine-grain service can be consistent.

For ease of understanding, related content of the FlexE is first described.

FlexE group: Each FlexE group includes one or more PHYs. When a plurality of PHYs are included, the plurality of PHYs are physically independent. A network device to which a FlexE technology is applied may identify, by using PHY numbers, specific PHYs included in a FlexE group, to implement logical bonding of a plurality of PHYs. For example, each PHY number may be identified by using a number ranging from 1 to 254, and 0 and 255 are reserved numbers. A PHY number may correspond to an interface on the network device. Two adj acent network devices need to use a same number to identify a same PHY PHY numbers included in a FlexE group do not need to be consecutive. Usually, there is one FlexE group between two network devices. However, this application does not limit that there is only one FlexE group between two network devices. In other words, there may be a plurality of FlexE groups between two network devices. One PHY may be used to carry at least one client, and one client may be transmitted over at least one PHY. The FlexE may support mapping and transmission of any quantity of different FlexE clients over any group of PHYs, to implement PHY bonding, channelization, sub-rating, and other functions.

FlexE client: The FlexE client corresponds to various user interfaces or bandwidths of a network. The FlexE client represents a client data stream transmitted in a specified slot (one or more slots) in a FlexE group. One FlexE group may carry a plurality of FlexE clients, and one FlexE client may correspond to one or more user service data streams (which may also be referred to as MAC clients). The FlexE client may be flexibly configured based on a bandwidth requirement, and supports Ethernet MAC data streams of various rates (for example, data streams of 10G, 40G, n*25G, and even non-standard rates). For example, the data streams may be transmitted to a FlexE shim layer as 64B/66B encoded data streams. Clients sent over a same FlexE group need to share a same clock, and these clients need to perform adaptation based on allocated slot rates. In this application, a FlexE client (which may also be referred to as a FlexE client interface) may be used to transmit a service data stream of the corresponding FlexE client. The FlexE client interface is a logical interface. Each FlexE interface may be logically divided into one or more FlexE client interfaces, each FlexE interface may be divided into a plurality of slots in time domain, and each FlexE client interface occupies at least one of the plurality of slots.

FlexE shim: The FlexE shim is an additional logical layer inserted between a MAC layer and a PHY layer (PCS sublayer) in a conventional Ethernet architecture, and is a core architecture for implementing a FlexE technology through a slot distribution mechanism. For a transmit end, a main function of the FlexE shim is to encapsulate data into a slot (slot) obtained through division in advance. Then, slots obtained through division are mapped to PHYs in a FlexE group based on a FlexE slot table for transmission. Each slot is mapped to one PHY in the FlexE group. A 100GE PHY is used as an example. The FlexE shim layer may divide each 100GE PHY in the FlexE group into data bearer channels of 20 slots (slot), and a bandwidth corresponding to each slot is 5 Gbps. Each time 64B/66B data of 1023*20 slots is sent over PHYs, a FlexE overhead (Overhead, OH) is inserted to notify a receive end of how to parse received data.

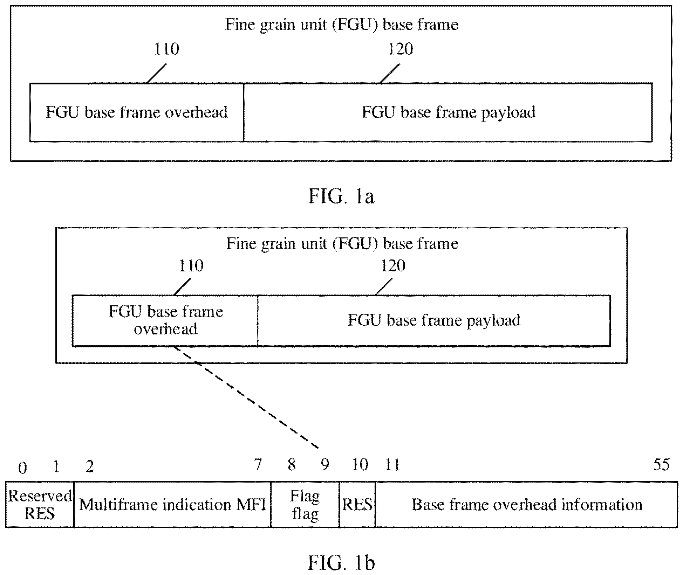

Fine-grain service: In some embodiments, a slot corresponding to a large bandwidth may be further divided into a plurality of sub-slots (sub-slot) to carry fine-grain services. For example, a slot with a corresponding bandwidth of 5 Gbps is further divided into 480 sub-slots at a grain of 10 Mbps, and the 480 sub-slots are used to carry fine-grain services. For example, the first sub-slot, the third sub-slot, and the fifth sub-slot in the 480 sub-slots are used to carry a fine-grain service 1. When a fine-grain service is transmitted, for a transmit end, a FlexE shim may encapsulate, based on a fine-grain slot configuration, data into a sub-slot obtained through division in advance for transmission. For a receive end, the FlexE shim may restore, based on the fine-grain slot configuration, data received in the slot with the corresponding bandwidth of 5 Gbps to original fine-grain service data, and continue transmission. In an example, the fine-grain service data may be carried in a fine grain unit (fine granularity unit, FGU) base frame. Refer to FIG. 1a for understanding. FIG. 1a is a schematic diagram of a structure of an FGU base frame according to an embodiment of this application. The FGU base frame includes an FGU base frame overhead 110 and an FGU base frame payload 120. The FGU base frame overhead 110 may be used to carry fine-grain slot information, and the FGU base frame payload 120 is used to carry the fine-grain service data. The fine-grain slot information may be a mapping relationship between a sub-slot and a sub-client. The sub-client is similar to a FlexE client, and also corresponds to various user interfaces or bandwidths of a network. A difference from the FlexE client lies in that the sub-client represents a client data stream transmitted in a sub-slot, and one sub-client may correspond to one or more sub-slots.

In a scenario in which a slot with a corresponding bandwidth of 5 Gbps is further divided at a grain of 10 Mbps, in an example, one FGU base frame may include 24 sub-slots, each sub-slot includes 65 bytes, and each sub-slot may carry eight 65-bit code blocks. In other words, the base frame payload 120 may include 65*24=1560 bytes. Twenty FGU base frames form a multiframe. The multiframe provides 24*20=480 sub-slots.

For a FlexE OH insertion manner and a structure of an overhead frame, in a specific implementation, refer to a FlexE-related description part of the electrical and optical internetworking forum (Optical Internetworking Forum, OIF). Details are not described herein.

The following describes the FGU base frame overhead 110 in the FGU base frame.

FIG. 1b is a schematic diagram of a structure of an FGU base frame overhead. The FGU base frame overhead shown in FIG. 1b includes 56 bits (bit).

A bit 0 and a bit 1 are a reserved field.

A bit 2 to a bit 7 are a multiframe indication (MultiFrame indication, MFI) field, and indicate a number of each FGU base frame in a multiframe. In a scenario in which 20 FGU base frames form a multiframe, a value range of the MFI field is 0 to 19. For the first FGU base frame in the multiframe, a value of the MFI field is 0; for the second FGU base frame in the multiframe, a value of the MFI field is 1; and by analogy, for the last FGU base frame in the multiframe, a value of the MFI field is 19.

A bit 8 and a bit 9 are a flag (flag) field, and the flag field indicates content carried in a bit 16 to a bit 48 of the base frame overhead. In an example, the bit 16 to the bit 48 of the base frame overhead are used to carry a general communication channel (general communication channel, GCC) field. In another example, the bit 16 to the bit 48 of the base frame overhead are used to carry information such as a client identifier (identifier, ID) and a sub-slot ID. In this embodiment of this application, the client ID carried in the FGU base frame overhead is a sub-client ID. For example, a client ID 1 mentioned below is a sub-client ID 1.

A bit 10 is a reserved field.

A bit 11 to a bit 55 are used to carry base frame overhead information.

In an example, the China Mobile enterprise standard defines the bit 11 to a bit 15 of the base frame overhead.

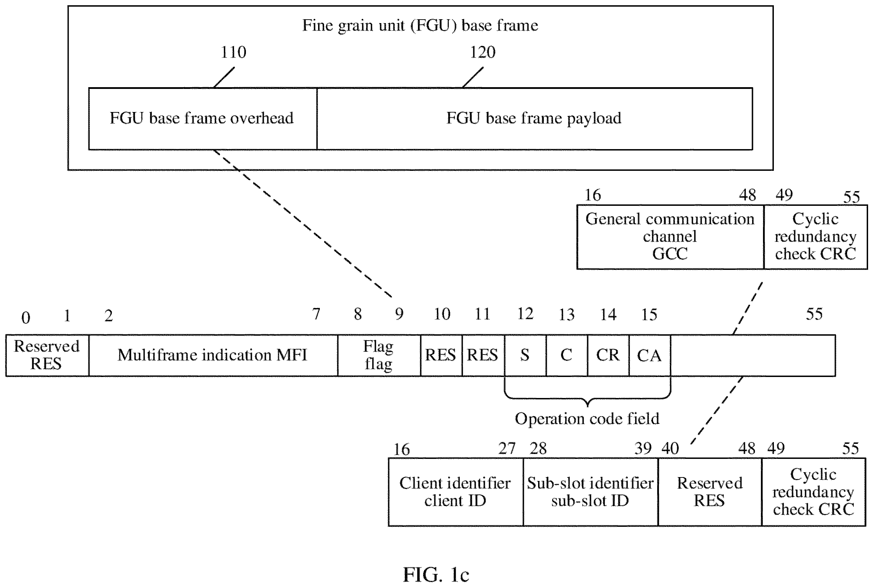

FIG. 1c is a schematic diagram of a structure of another FGU base frame overhead according to an embodiment of this application. As shown in FIG. 1c:

A bit 11 is a reserved field.

A bit 12 is a downstream done (downstream done, DD) indication bit, and the DD indication bit is a slot addition adjustment notification indication bit, and is used by the downstream to indicate the upstream to trigger slot negotiation when a slot needs to be added. The DD indication bit may also be referred to as an S indication bit.

A bit 13 is a configuration commit (configuration commit, CMT) indication bit, and the CMT indication bit indicates that a slot configuration takes effect. The CMT indication bit may also be referred to as a C indication bit.

A bit 14 is a configuration request (configuration request, CR) indication bit, and the CR indication bit indicates a slot adjustment request.

A bit 15 is a configuration acknowledge (configuration acknowledge, CA) indication bit, and the CA indication bit indicates a slot adjustment response. After receiving the slot adjustment request, a receiving apparatus sends the slot adjustment response to a sending apparatus.

Content carried in a bit 16 to a bit 48 is indicated by a flag field. For example, a GCC field may be carried, or a client ID field, a sub-slot ID field, and a reserved field may be carried.

A bit 49 to a bit 55 are a cyclic redundancy check (cyclic redundancy check, CRC) field. In an example, the CRC field is used to carry a CRC value of data carried in a bit 8 to the bit 48.

In an example, a field including four bits, to be specific, the bit 12 to the bit 15, may also be referred to as an operation code field, and there are a total of 16 possibilities for a value of the operation code field.

It can be learned from the foregoing descriptions of the DD indication bit, the CMT indication bit, the CR indication bit, and the CA indication bit that four values of the operation code field have been used, and the four values are specifically as follows:
1000: indicates a slot addition adjustment notification, and is used by the downstream to indicate the upstream to trigger slot negotiation when the slot needs to be added.
0100: indicates that the slot configuration takes effect.
0010: indicates the slot adjustment request.
0001: indicates the slot adjustment response.

Currently, in addition to the foregoing four values, values 0000, 1111, and 1010 have also been used, and other nine values have not been used.

Other content of the FGU base frame overhead is not described in detail herein. In the following descriptions, the "FGU base frame overhead" may also be briefly referred to as a "base frame overhead", and the two may be used interchangeably.

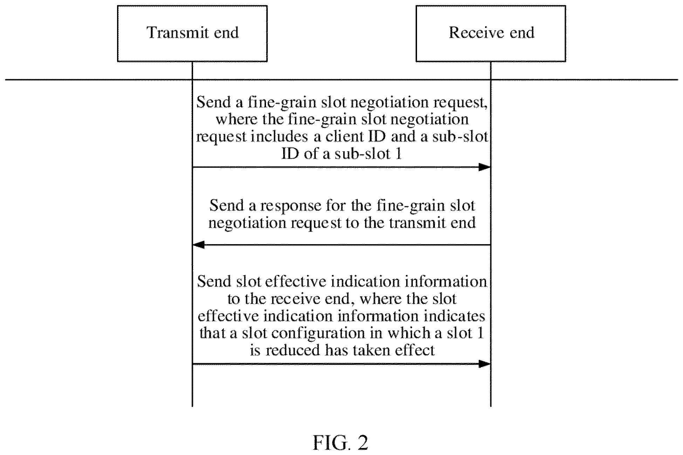

If fine-grain slot configurations of two network devices are inconsistent, the two network devices cannot transmit fine-grain service data. Currently, a network device serving as a transmit end may initiate fine-grain slot negotiation, to enable the fine-grain slot configurations of the two network devices to be consistent. However, currently, the fine-grain slot negotiation supports only incremental negotiation. For example, when one or more sub-slots need to be added for a fine-grain service, the network device serving as the transmit end triggers negotiation for the one or more added sub-slots. For another example, when one or more sub-slots need to be reduced for a fine-grain service, the network device serving as the transmit end triggers negotiation for the one or more reduced sub-slots. A current incremental negotiation manner is described by using an example in which a sub-slot is reduced. FIG. 2 is a signaling interaction diagram of fine-grain slot negotiation according to an embodiment of this application. As shown in FIG. 2:

A transmit end sends a fine-grain slot negotiation request to a receive end, where the fine-grain slot negotiation request includes a client ID and a sub-slot ID of a sub-slot a. A value of the client ID is 0, indicating that the sub-slot a is not allocated to any client, so that effect of reducing allocation of the slot a is achieved. The fine-grain slot negotiation request may be carried in an FGU base frame overhead. In this case, a value of an operation code field of the FGU base frame overhead is 0010.

After receiving the fine-grain slot negotiation request, the receive end may send a response for the fine-grain slot negotiation request to the transmit end. The response may be carried in an FGU base frame overhead. In this case, a value of an operation code field of the FGU base frame overhead is 0001.

After receiving the response message, the transmit end sends slot effective indication information to the receive end, where the slot effective indication information indicates that a slot configuration in which the slot a is reduced has taken effect. The slot effective message may be carried in an FGU base frame overhead. In this case, a value of an operation code field of the FGU base frame overhead is 0100.

If a plurality of sub-slots need to be reduced, the foregoing procedure may be performed for each reduced sub-slot.

If a plurality of sub-slots need to be added, slot negotiation may be performed for each added sub-slot. A slot negotiation manner for an added sub-slot is similar to the procedure shown in FIG. 2, and a difference lies in that when a sub-slot is added, a client ID carried in a fine-grain slot negotiation request is not an invalid ID, but an ID of a client for which the sub-slot needs to be added. For example, if a sub-slot 3 needs to be added for a client a, the fine-grain slot request includes a client ID of the client a and an ID of the sub-slot 3. In addition, before the transmit end sends the fine-grain slot negotiation request, the receive end may send a slot addition indication notification to the transmit end, and the transmit end initiates, based on the slot addition indication notification, a slot addition negotiation procedure. The slot addition indication notification may be carried in an FGU base frame overhead. In this case, a value of an operation code field of the FGU base frame overhead is 1000.

However, in the foregoing incremental negotiation manner, fine-grain slot configurations between the transmit end and the receive end may still be inconsistent. The following provides descriptions by using examples:
In an example, a fine-grain slot configuration manner of one end (for example, the transmit end) is switched to a static mode, and a fine-grain slot configuration is modified in the static mode. For example, one or more sub-slots are added, or one or more sub-slots are reduced. Then, the fine-grain slot configuration manner is switched to a negotiation mode. In this case, the other end (for example, the receive end) cannot sense a slot modification of the peer end in the static mode. Therefore, the fine-grain slot configurations between the transmit end and the receive end may still be inconsistent.

In another example, one end (for example, the transmit end) deletes an original fine-grain slot configuration and reconfigures a new slot configuration. In this case, the other end (for example, the receive end) cannot sense a slot modification of the peer end. Therefore, the fine-grain slot configurations between the transmit end and the receive end may still be inconsistent.

In still another example, one end (for example, the transmit end) modifies a client ID, for example, modifies a client ID corresponding to a sub-slot a from an ID of a client a to an ID of a client b. In this case, because the other end (for example, the receive end) cannot sense a modification of the peer end on the client ID, the fine-grain slot configurations between the transmit end and the receive end may still be inconsistent.

In yet another example, in a fine-grain slot negotiation process, if a device corresponding to one end is powered down or reset, it is possible that one end has updated a slot configuration to a new configuration, but the other end still uses the old configuration. Therefore, the fine-grain slot configurations between the transmit end and the receive end may still be inconsistent.

The foregoing describes only possible scenarios in which the fine-grain slot configurations between the transmit end and the receive end are inconsistent. A scenario in which the fine-grain slot configurations between the transmit end and the receive end are inconsistent is not limited to the foregoing mentioned scenarios, and is not described herein one by one.

To enable the fine-grain slot configurations between the transmit end and the receive end to be consistent, so as to normally transmit a fine-grain service, embodiments of this application provide a slot negotiation method for a fine-grain service in a FlexE. In the method, full slots negotiation may be performed between the transmit end and the receive end based on the fine-grain service, to ensure consistency of the fine-grain slot configurations between the transmit end and the receive end. The following describes the slot negotiation method for a fine-grain service in a FlexE provided in embodiments of this application by using an example in which two sub-slots are allocated to a fine-grain service.

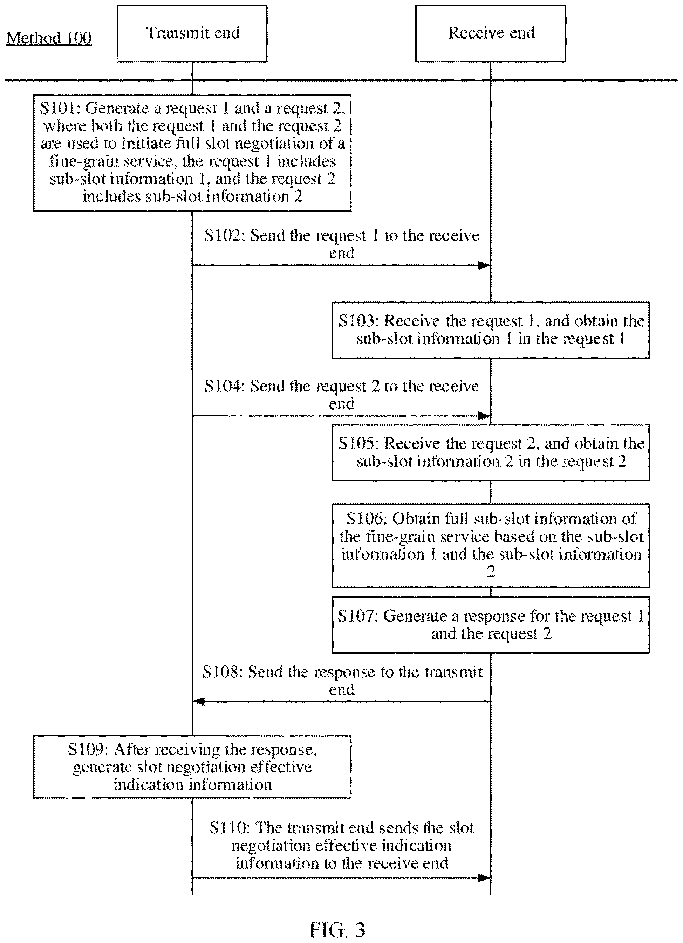

FIG. 3 is a signaling interaction diagram of a slot negotiation method for a fine-grain service in a FlexE according to an embodiment of this application. The method 100 shown in FIG. 3 may include the following S101 to S110.

S101: A transmit end generates a request 1 and a request 2, where both the request 1 and the request 2 are used to initiate full slots negotiation of the fine-grain service, the request 1 includes sub-slot information 1, and the request 2 includes sub-slot information 2.

In an example, the transmit end may obtain the sub-slot information 1 and the sub-slot information 2 based on local full slots information of the fine-grain service, and then generate the request 1 and the request 2.

In some embodiments, the transmit end may store two slot tables: a slot table A and a slot table B. Currently, the slot table A is a working table, and the slot table B is a backup table. The transmit end may obtain the sub-slot information 1 and the sub-slot information 2 from the slot table B. After the method 100 is performed, the slot table B of the transmit end is switched as a working table, and the slot table A is switched as a backup table. In addition, the transmit end modifies content of the slot table A, and content of the modified slot table A is consistent with content of the slot table B.

In an example, both the request 1 and the request 2 are used to initiate full slots negotiation of a fine-grain service 1. The so-called full slots negotiation refers to negotiation performed for all sub-slots occupied by the fine-grain service.

In an example, the sub-slot information 1 indicates that the fine-grain service 1 occupies a sub-slot 1. In some embodiments, the sub-slot information 1 includes a client identifier (client ID) 1 and an identifier of the sub-slot 1. The client identifier 1 is used to identify the fine-grain service 1, and the identifier of the sub-slot 1 is used to identify that the fine-grain service 1 occupies the sub-slot 1. The client ID 1 in the sub-slot information 1 may be a sub-client ID 1.

In an example, the request 1 may be carried in a base frame overhead 1. In other words, the transmit end may generate the base frame overhead 1, and the base frame overhead 1 is used to request to initiate full slots negotiation of the fine-grain service.

In an example, the request 1 may include indication information 1, and the indication information 1 indicates that the request 1 is a full slots negotiation request for the fine-grain service. When the request 1 is carried in the base frame overhead 1, the indication information 1 may be carried in a field 1 in the base frame overhead 1.

In some embodiments, the field 1 may be an operation code field. In this case, the indication information 1 may be carried in the operation code field of the base frame overhead 1. It can be learned from the foregoing descriptions that, among 16 values of the operation code field, nine values 0011, 0101, 0110, 0111, 1001, 1011, 1100, 1101, and 1110 have not been used. Therefore, one of the nine values may be selected to represent the indication information 1. For example, the value 1010 may be used to represent the indication information 1.

In some other embodiments, the field 1 may be a reserved field. In this case, the indication information 1 may be carried in the reserved field of the base frame overhead 1. For example, the base frame overhead shown in FIG. 1c is used as an example, and one or more bits in a bit 0, a bit 1, a bit 10, and the bit 11 of the base frame overhead may be used to carry the indication information 1. For example, a value 1 of the bit 0 of the base frame overhead represents the indication information 1.

In still some other embodiments, the field 1 may be a GCC field. In this case, the indication information 1 may be carried in the GCC field of the base frame overhead 1. For example, one or more bits in the GCC field are used to represent the indication information 1. For example, a value 1 of the first bit in the GCC field represents the indication information 1.

Certainly, the field 1 may alternatively be one or more of the operation code field, the reserved field, or the GCC field. In this case, the indication information 1 may alternatively be carried in one or more of the operation code field, the reserved field, or the GCC field. For example, the operation code field and the reserved field may be used to carry the indication information 1. For example, the operation code field still uses a value 0010 of a conventional slot negotiation request, and one or more reserved bits (for example, a bit 0) indicate that the negotiation request is a full slots negotiation request. In an example, when a value of the operation code field is 0010, and a value of the bit 0 of the base frame overhead 1 is 1, the base frame overhead 1 carries the indication information 1. For another example, the operation code field and the GCC field may be used to carry the indication information 1. For example, the operation code field still uses a value 0010 of a conventional slot negotiation request, and one or more reserved bits in the GCC field indicate that the negotiation request is a full slots negotiation request. In an example, when a value of the operation code field is 0010, and a value of the first bit of the GCC field of the base frame overhead 1 is 1, the base frame overhead 1 carries the indication information 1. For another example, the reserved field and the GCC field may be used to carry the indication information 1. For example, one or more reserved bits and one or more bits in the GCC field are used to represent the indication information 1.

In an example, the request 1 may include indication information 2, and the indication information 2 indicates that the request 1 is not a last request in a plurality of requests for the full slots negotiation. In this way, a receive end may determine, based on the indication information 2, that the request 1 is not the last request in the plurality of requests for the full slots negotiation, and continue to receive another request for the full slots negotiation.

In an example, if the request 1 is carried in the base frame overhead 1, the indication information 2 may be carried in a field 2 in the base frame overhead 1.

In some embodiments, the field 2 may be a last element (last element, LE) field of the base frame overhead 1. In this case, the indication information 2 may be carried in the LE field of the base frame overhead 1. For the LE field, the base frame overhead shown in FIG. 1c is used as an example, and it should be noted that the LE field may be the bit 10 of the base frame overhead. When a value of the LE field is 0, the base frame overhead 1 carries the indication information 2.

In some other embodiments, the field 2 may be the reserved field of the base frame overhead 1. In this case, the indication information 2 may be carried in the reserved field of the base frame overhead 1. For example, the base frame overhead shown in FIG. 1c is used as an example, and one or more bits in the bit 0, the bit 1, the bit 10, and the bit 11 of the base frame overhead may be used to carry the indication information 2. For example, a value 0 of the bit 1 of the base frame overhead represents the indication information 2.

In still some other embodiments, the field 2 may be the GCC field of the base frame overhead 1. In this case, the indication information 2 may be carried in the GCC field of the base frame overhead 1. For example, one or more bits in the GCC field are used to represent the indication information 2. For example, a value 0 of the second bit in the GCC field represents the indication information 2.

In an example, the request 1 may include a quantity of slots, and the quantity of slots indicates a quantity of all sub-slots of the fine-grain service 1. In this example, the quantity of slots is 2.

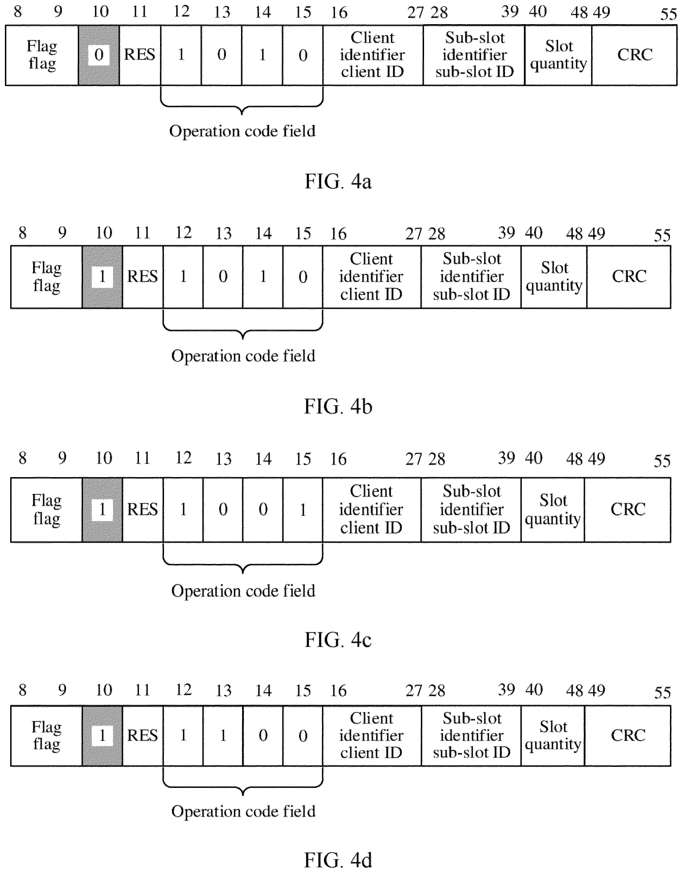

The base frame overhead 1 may be understood with reference to FIG. 4a. FIG. 4a is a schematic diagram of a structure of the base frame overhead 1 carrying the request 1 according to an embodiment of this application. As shown in FIG. 4a, the operation code field (with a value 1010) of the base frame overhead 1 is used to carry the indication information 1; a bit 10 of the base frame overhead 1 is the LE field, and indicates that the request 1 is not the last request; and the base frame overhead 1 further includes a client ID field and a sub-slot ID field, where the client ID field indicates the fine-grain service 1, and the sub-slot ID field carries the ID of the sub-slot 1 and indicates that the fine-grain service 1 occupies the sub-slot 1. The base frame overhead 1 further includes a slot quantity field, indicating the quantity of all the sub-slots occupied by the fine-grain service 1. In the method 100, a value of the slot quantity field is 2.

FIG. 4a is merely shown for ease of understanding, and does not constitute a limitation on this embodiment of this application. A structure of the base frame overhead 1 is not limited to the structure shown in FIG. 4a.

For the request 2, it should be noted that:

In an example, the sub-slot information 2 in the request 2 indicates that the fine-grain service 1 occupies a sub-slot 2. In some embodiments, the sub-slot information 2 includes the client ID 1 and an identifier of the sub-slot 2. The client identifier 1 is used to identify the fine-grain service 1, and the identifier of the sub-slot 2 is used to identify that the fine-grain service 1 occupies the sub-slot 2.

In an example, the request 2 may be carried in a base frame overhead 2. In other words, the transmit end may generate the base frame overhead 2, and the base frame overhead 2 is used to request to initiate full slots negotiation of the fine-grain service.

In an example, the request 2 may include indication information 1, and the indication information 1 indicates that the request 2 is a full slots negotiation request for the fine-grain service. When the request 2 is carried in the base frame overhead 2, the indication information 1 may be carried in a field 1 in the base frame overhead 1. For the field 1, refer to the foregoing related description part. Details are not described herein again.

In an example, the request 2 may include indication information 3, and the indication information 3 indicates that the request 2 is the last request in the plurality of requests for the full slots negotiation. In this way, the receive end may determine, based on the indication information 3, that the request 2 is the last request in the plurality of requests for the full slots negotiation, to obtain full slots configurations of the fine-grain service based on the received requests.

In an example, if the request 2 is carried in the base frame overhead 2, the indication information 3 may be carried in a field 3 in the base frame overhead 2.

In some embodiments, the field 3 may be an LE field of the base frame overhead 2. In this case, the indication information 3 may be carried in the LE field of the base frame overhead 2. For the LE field, the base frame overhead shown in FIG. 1c is used as an example, and it should be noted that the LE field may be a bit 10 of the base frame overhead. When a value of the LE field is 1, the base frame overhead 2 carries the indication information 3.

In some other embodiments, the field 3 may be a reserved field of the base frame overhead 2. In this case, the indication information 3 may be carried in the reserved field of the base frame overhead 2. For example, the base frame overhead shown in FIG. 1c is used as an example, and one or more bits in a bit 0, a bit 1, the bit 10, and the bit 11 of the base frame overhead may be used to carry the indication information 3. For example, a value 1 of the bit 1 of the base frame overhead represents the indication information 3.

In still some other embodiments, the field 3 may be a GCC field of the base frame overhead 2. In this case, the indication information 3 may be carried in the GCC field of the base frame overhead 2. For example, one or more bits in the GCC field are used to represent the indication information 3. For example, a value 1 of the second bit in the GCC field represents the indication information 3.

In addition, in an example, similar to the request 1, the request 2 may further include the quantity of slots.

The base frame overhead 2 may be understood with reference to FIG. 4b. FIG. 4b is a schematic diagram of a structure of the base frame overhead 2 carrying the request 2 according to an embodiment of this application. As shown in FIG. 4b, an operation code field (with a value 1010) of the base frame overhead 2 is used to carry the indication information 1; a bit 10 of the base frame overhead 2 is the LE field, and indicates that the request 2 is the last request; and the base frame overhead 2 further includes a client ID field and a sub-slot ID field, where the client ID field indicates the fine-grain service 1, and the sub-slot ID field carries the ID of the sub-slot 2 and indicates that the fine-grain service 1 occupies the sub-slot 2. The base frame overhead 2 further includes a slot quantity field, indicating the quantity of all the sub-slots occupied by the fine-grain service 1. In the method 100, a value of the slot quantity field is 2.

FIG. 4b is merely shown for ease of understanding, and does not constitute a limitation on this embodiment of this application. A structure of the base frame overhead 2 is not limited to the structure shown in FIG. 4b.

S102: The transmit end sends the request 1 to the receive end.

S103: The receive end receives the request 1, and obtains the sub-slot information 1 in the request 1.

The transmit end sends the request 1 to the receive end. After receiving the request 1, the receive end may obtain the sub-slot information 1 in the request 1, for example, may obtain a correspondence between the client identifier and the identifier of the sub-slot 1.

In an example, if the request 1 includes the indication information 2, the receive end may determine that the request 1 is not the last request for the full slots negotiation. Therefore, the receive end may continue to receive another request for the full slots negotiation.

In an example, the request 1 includes the quantity of slots, and a value of the quantity of slots is 2. In this case, because the quantity of slots is 2, and the receive end currently receives only one request: the request 1, the receive end may determine that receiving of the plurality of requests for the slot negotiation has not been completed. Therefore, the receive end may continue to receive another request for the full slots negotiation.

After obtaining the sub-slot information 1, the receive end may store the sub-slot information 1.

S104: The transmit end sends the request 2 to the receive end.

S105: The receive end receives the request 2, and obtains the sub-slot information 2 in the request 2.

The transmit end sends the request 2 to the receive end. After receiving the request 2, the receive end may obtain the sub-slot information 2 in the request 2, for example, may obtain a correspondence between the client identifier and the identifier of the sub-slot 2.

In an example, if the request 2 includes the indication information 3, the receive end may determine that the request 2 is the last request for the full slots negotiation. Therefore, the receive end may perform S106.

In an example, the request 2 includes the quantity of slots, and the value of the quantity of slots is 2. In this case, because the quantity of slots is 2, and the receive end has currently received two requests: the request 1 and the request 2, the receive end may determine that receiving of the plurality of requests for the slot negotiation has been completed. Therefore, the receive end may perform S106.

In an example, the request 2 includes both the indication information 3 and the quantity of slots (with the value 2). Because the receive end may determine, based on the indication information 3, that receiving of the plurality of requests for the full slots negotiation has been completed, the receive end may determine, based on a quantity of received requests and the quantity of slots carried in the request 2, whether a packet loss occurs in the plurality of requests for the full slots negotiation. For example, the quantity of slots is 2, the receive end has received the request 2 including the indication information 3, and the receive end has received two requests: the request 1 and the request 2. In this case, the receive end may determine that no packet loss occurs in the requests for the slot negotiation. Further, the receive end may perform S106.

S106: The receive end obtains full sub-slot information of the fine-grain service based on the sub-slot information 1 and the sub-slot information 2.

In an example, the full sub-slot information indicates that the fine-grain service 1 occupies the sub-slot 1 and the sub-slot 2, and does not occupy another sub-slot.

In some embodiments, the receive end may store two slot tables: the slot table A and the slot table B. The slot table A is a working table, and the slot table B is a backup table. If the transmit end and the receive end do not perform slot negotiation, content of the slot table A is consistent with content of the slot table B. After the transmit end and the receive end perform slot negotiation, for example, perform S101 to S105, the receive end may modify the slot table B, to obtain the slot table B including the full sub-slot information of the fine-grain service. In an example, the receive end may modify client IDs corresponding to all sub-slots corresponding to the fine-grain service 1 in the slot table B to 0, and then modify client IDs corresponding to the sub-slot 1 and the sub-slot 2 to the client ID of the fine-grain service 1. The slot table B is described by using an example with reference to Table 1 to Table 3. In Table 1, client ID values corresponding to the sub-slot 1, a sub-slot 3, a sub-slot 5, and a sub-slot 6 are all 10. A client ID value corresponding to the sub-slot 2 is m, where m is an integer not equal to 10. It is assumed that the client ID value of 10 corresponds to the fine-grain service 1. In this case, the receive end may first modify client IDs corresponding to the sub-slot 1, the sub-slot 3, the sub-slot 5, and the sub-slot 6 to 0, to obtain Table 2, and then modify the client IDs corresponding to the sub-slot 1 and the sub-slot 2 to 10, to obtain Table 3. The modified slot table B includes slot information shown in Table 3.

**Table 1**

| Sub-slot | Client ID |
|---|---|
| Sub-slot 1 | 10 |
| Sub-slot 2 | m |
| Sub-slot 3 | 10 |
| Sub-slot 5 | 10 |
| Sub-slot 6 | 10 |

**Table 2**

| Sub-slot | Client ID |
|---|---|
| Sub-slot 1 | 0 |
| Sub-slot 2 | m |
| Sub-slot 3 | 0 |
| Sub-slot 5 | 0 |
| Sub-slot 6 | 0 |

**Table 3**

| Sub-slot | Client ID |
|---|---|
| Sub-slot 1 | 10 |
| Sub-slot 2 | 10 |
| Sub-slot 3 | 0 |
| Sub-slot 5 | 0 |
| Sub-slot 6 | 0 |

It should be noted that Table 1 to Table 3 are merely shown for ease of understanding, and do not constitute a limitation on this embodiment of this application. Content included in the slot table B is not limited to content in Table 1 to Table 3, and the slot table B further includes configuration information of another sub-slot. Details are not described herein one by one.

S107: The receive end generates a response for the request 1 and the request 2.

In an example, the receive end may determine, based on the indication information 3 in the request 2, that the request 2 is the last request for the full slots negotiation, and therefore generate the response for the request 1 and the request 2.

In another example, the receive end may determine, based on the quantity of slots in the request 2 and the quantity of received requests, that the request 2 is the last request for the full slots negotiation, and therefore generate the response for the request 1 and the request 2.

In an example, the response is carried in a base frame overhead 3. In an example, a value of an operation code field of the base frame overhead 3 may be 0001, and indicates that the base frame overhead is a slot adjustment acknowledgment response.

In an example, considering that the transmit end and the receive end may perform incremental slot negotiation for the fine-grain service before performing full negotiation for the fine-grain service, to avoid that the transmit end mistakenly considers a response for the incremental slot negotiation as a response for the full slots negotiation, the response for the request 1 and the request 2 may include indication information 4, where the indication information 4 indicates that the response for the request 1 and the request 2 is the response for the full slots negotiation.

In an example, if the response is carried in the base frame overhead 3, the indication information 4 may be carried in a field 4 in the base frame overhead 3.

In some embodiments, the field 4 may be the operation code field. In this case, the indication information 4 may be carried in the operation code field of the base frame overhead 3. It can be learned from the foregoing descriptions that, among 16 values of the operation code field, nine values 0011, 0101, 0110, 0111, 1001, 1011, 1100, 1101, and 1110 have not been used. Therefore, one of the nine values may be selected to represent the indication information 4. For example, the value 1001 may be used to represent the indication information 4.

In some other embodiments, the field 4 may be a reserved field. In this case, the indication information 4 may be carried in the reserved field of the base frame overhead 3. For example, the base frame overhead shown in FIG. 1c is used as an example, and one or more bits in a bit 0, a bit 1, a bit 10, and the bit 11 of the base frame overhead may be used to carry the indication information 4. For example, a value 1 of the bit 11 of the base frame overhead represents the indication information 4.

In still some other embodiments, the field 4 may be a GCC field. In this case, the indication information 4 may be carried in the GCC field of the base frame overhead 3. For example, one or more bits in the GCC field are used to represent the indication information 4. For example, a value 1 of the third bit in the GCC field represents the indication information 4.

Certainly, the field 4 may alternatively be one or more of the operation code field, the reserved field, or the GCC field. In this case, the indication information 4 may alternatively be carried in one or more of the operation code field, the reserved field, or the GCC field. For example, the operation code field and the reserved field may be used to carry the indication information 4. For example, the operation code field still uses a value 0001 of a conventional slot adjustment response, and one or more reserved bits (for example, a bit 0) indicate that the slot adjustment response is a slot adjustment response for the full slots negotiation. In an example, when a value of the operation code field is 0001, and a value of the bit 0 of the base frame overhead 3 is 1, the base frame overhead 3 carries the indication information 4. For another example, the operation code field and the GCC field may be used to carry the indication information 4. For example, the operation code field still uses a value 0001 of a conventional slot adjustment response, and one or more reserved bits in the GCC field indicate that the response is a response for the full slots negotiation. In an example, when a value of the operation code field is 0001, and a value of the first bit of the GCC field of the base frame overhead 3 is 1, the base frame overhead 3 carries the indication information 4. For another example, the reserved field and the GCC field may be used to carry the indication information 4. For example, one or more reserved bits and one or more bits in the GCC field are used to represent the indication information 4.

The base frame overhead 3 may be understood with reference to FIG. 4c. FIG. 4c is a schematic diagram of a structure of the base frame overhead 3 according to an embodiment of this application. As shown in FIG. 4c, the operation code field (with a value 1001) of the base frame overhead 3 is used to carry the indication information 4; and a bit 10 of the base frame overhead 3 is an LE field, where a value of the LE field is 1 and indicates that only one response is included. The base frame overhead 3 further includes a client ID field and a sub-slot ID field. A value of the client ID field may still use a value of the client ID field in the base frame overhead 2. The base frame overhead 3 further includes the sub-slot ID field, and a value of the sub-slot ID field may still use a value of the sub-slot ID field in the base frame overhead 2. The base frame overhead 3 further includes a slot quantity field, and a value of the slot quantity field may still use the value of the slot quantity field in the base frame overhead 2.

When the transmit end and the receive end perform full slots negotiation for a plurality of fine-grain services, the transmit end may determine, based on the client ID field in the base frame overhead 3, that the response is a response for the full slots negotiation of the fine-grain service 1.

FIG. 4c is merely shown for ease of understanding, and does not constitute a limitation on this embodiment of this application. A structure of the base frame overhead 3 is not limited to the structure shown in FIG. 4c.

S108: The receive end sends the response to the transmit end.

S109: After receiving the response, the transmit end generates slot negotiation effective indication information.

After generating the response, the receive end sends the response to the transmit end. After receiving the response, the transmit end may determine that the receive end has received the request 1 and the request 2. Therefore, the transmit end may generate the slot negotiation effective indication information, and send the slot effective indication information to the receive end.

For the slot negotiation effective indication information, it should be noted:

In an example, the slot negotiation effective indication information is carried in a base frame overhead 4. In an example, a value of an operation code field of the base frame overhead 4 may be 0100, and indicates that the base frame overhead carries the slot configuration effective indication information.

In an example, considering that the transmit end and the receive end may perform incremental slot negotiation for the fine-grain service before performing full negotiation for the fine-grain service, to avoid that the receive end mistakenly considers slot negotiation effective indication information for the incremental slot negotiation as the slot negotiation effective indication information for the full slots negotiation, the slot negotiation effective indication information in S109 may include indication information 5, where the indication information 5 indicates that the full slots negotiation takes effect.

In an example, if the slot negotiation effective indication information is carried in the base frame overhead 4, the indication information 5 may be carried in a field 5 in the base frame overhead 4.

In some embodiments, the field 5 may be the operation code field. In this case, the indication information 5 may be carried in the operation code field of the base frame overhead 4. It can be learned from the foregoing descriptions that, among 16 values of the operation code field, nine values 0011, 0101, 0110, 0111, 1001, 1011, 1100, 1101, and 1110 have not been used. Therefore, one of the nine values may be selected to represent the indication information 5. For example, the value 1100 may be used to represent the indication information 5.

In some other embodiments, the field 5 may be a reserved field. In this case, the indication information 5 may be carried in the reserved field of the base frame overhead 4. For example, the base frame overhead shown in FIG. 1c is used as an example, and one or more bits in a bit 0, a bit 1, a bit 10, and the bit 11 of the base frame overhead may be used to carry the indication information 5. For example, values 1s of the bit 1 and the bit 11 of the base frame overhead represent the indication information 5.

In still some other embodiments, the field 5 may be a GCC field. In this case, the indication information 5 may be carried in the GCC field of the base frame overhead 4. For example, one or more bits in the GCC field are used to represent the indication information 5. For example, a value 1 of the fourth bit in the GCC field represents the indication information 5.

Certainly, the field 5 may alternatively be one or more of the operation code field, the reserved field, or the GCC field. In this case, the indication information 5 may alternatively be carried in one or more of the operation code field, the reserved field, or the GCC field. For example, the operation code field and the reserved field may be used to carry the indication information 5. For example, the operation code field still uses a value 0100 of conventional slot negotiation effective indication information, and one or more reserved bits (for example, a bit 0) indicate that the slot negotiation effective indication information is the slot negotiation effective indication information for the full slots negotiation. In an example, when a value of the operation code field is 0100, and a value of the bit 0 of the base frame overhead 4 is 1, the base frame overhead 4 carries the indication information 5. For another example, the operation code field and the GCC field may be used to carry the indication information 5. For example, the operation code field still uses a value 0100 of conventional slot negotiation effective indication information, and one or more reserved bits in the GCC field indicate that the slot negotiation effective indication information is the effective indication information for the full slots negotiation. In an example, when a value of the operation code field is 0100, and a value of the first bit of the GCC field of the base frame overhead 4 is 1, the base frame overhead 4 carries the indication information 5. For another example, the reserved field and the GCC field may be used to carry the indication information 5. For example, one or more reserved bits and one or more bits in the GCC field are used to represent the indication information 5.

The base frame overhead 4 may be understood with reference to FIG. 4d. FIG. 4d is a schematic diagram of a structure of the base frame overhead 4 according to an embodiment of this application. As shown in FIG. 4d, the operation code field (with a value 1100) of the base frame overhead 4 is used to carry the indication information 5; and a bit 10 of the base frame overhead 4 is an LE field, where a value of the LE field is 1 and indicates that only one piece of slot negotiation effective indication information is included. The base frame overhead 4 further includes a client ID field and a sub-slot ID field. A value of the client ID field may still use the value of the client ID field in the base frame overhead 3. The base frame overhead 4 further includes the sub-slot ID field, and a value of the sub-slot ID field may still use the value of the sub-slot ID field in the base frame overhead 3. The base frame overhead 4 further includes a slot quantity field, and a value of the slot quantity field may still use the value of the slot quantity field in the base frame overhead 3.

When the transmit end and the receive end perform full slots negotiation for a plurality of fine-grain services, the receive end may determine, based on the client ID field in the base frame overhead 4, that the slot negotiation effective indication information is effective indication information for the fine-grain service 1.

FIG. 4d is merely shown for ease of understanding, and does not constitute a limitation on this embodiment of this application. A structure of the base frame overhead 4 is not limited to the structure shown in FIG. 4d.

S110: The transmit end sends the slot negotiation effective indication information to the receive end.

After sending the slot negotiation effective indication information to the receive end, the transmit end may switch the slot table B of the transmit end as a working table, and switch the slot table A of the transmit end as a backup table. After receiving the slot negotiation effective indication information, the receive end may switch the slot table B of the receive end as a working table, and switch the slot table A of the receive end as a backup table. In this way, the transmit end and the receive end can transmit the fine-grain service based on the full sub-slot information obtained through negotiation based on the full slots configurations.

In addition, the receive end may further modify content of the slot table A of the receive end, to enable content of the modified slot table A to be consistent with content of the slot table B.

In addition, a sub-slot occupied by the fine-grain service 1 may not be limited to the two sub-slots in the method 100, and the fine-grain service 1 may occupy one or more sub-slots.

When the fine-grain service 1 occupies more than two sub-slots, for example, M sub-slots, in an example, the transmit end may generate M requests, where one request carries information about one sub-slot. For content carried in each request, refer to the foregoing description parts of the request 1 and the request 2. Specifically, for first M-1 requests in the M requests, refer to the foregoing description part of the request 1, and for a last request in the M requests, refer to the foregoing description part of the request 2. Details are not described herein again.

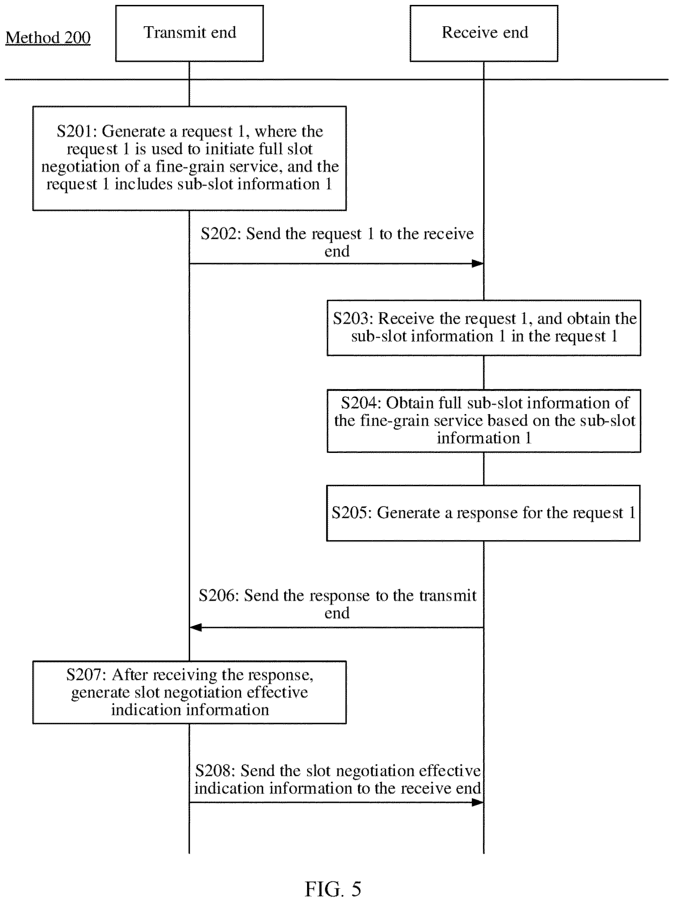

When the fine-grain service 1 occupies only one sub-slot, the full slots negotiation for the fine-grain service 1 may be implemented according to a method 200 shown in FIG. 5. FIG. 5 is a signaling interaction diagram of another slot negotiation method for a fine-grain service in a FlexE according to an embodiment of this application. The method 200 may include, for example, the following S201 to S208.

S201: A transmit end generates a request 1, where the request 1 is used to initiate full slots negotiation of the fine-grain service, and the request 1 includes sub-slot information 1. S202: The transmit end sends the request 1 to a receive end.

S203: The receive end receives the request 1, and obtains the sub-slot information 1 in the request 1.

A specific implementation of S201 to S203 is basically the same as that of S101 to S103 in the method 100. A difference lies in: In the method 100, the request 1 is not the last request for the full slots negotiation. However, in the method 200, the request 1 is a last request for the full slots negotiation. Therefore, a difference between the request 1 in the method 200 and the request 1 in the method 100 lies in:

In the method 100, the request 1 includes the indication information 2, and the indication information 2 indicates that the request 1 is not the last request for the full slots negotiation.

However, in the method 200, the request 1 includes indication information 3, and the indication information 3 indicates that the request 1 is the last request for the full slots negotiation. For the indication information 3, refer to the description part of the indication information 3 in the method 100. Details are not described herein again.

S204: The receive end obtains full sub-slot information of the fine-grain service based on the sub-slot information 1.

For a specific implementation of S204, refer to a related description part of S106 in the method 100. Details are not described herein again. A difference between S204 and S106 lies in: The full slots information determined in S204 indicates that the fine-grain service 1 occupies a sub-slot 1, and does not occupy another sub-slot. The full slots information determined in S106 indicates that the fine-grain service 1 occupies the sub-slot 1 and the sub-slot 2, and does not occupy another sub-slot.

S205: The receive end generates a response for the request 1.

S206: The receive end sends the response to the transmit end.

S207: After receiving the response, the transmit end generates slot negotiation effective indication information.

S208: The transmit end sends the slot negotiation effective indication information to the receive end.

A specific implementation of S205 to S208 is the same as that of S107 to S110 in the method 100. Therefore, for the specific implementation of S205 to S208, refer to the description part of S107 to S110. Details are not described herein again.

In addition, in the method 100 and the method 200, although one request carries information about one sub-slot, this is merely shown in the method 100 and the method 200 for ease of understanding, and does not constitute a limitation on embodiments of this application. In some other embodiments, a request and a sub-slot are not necessarily in one-to-one correspondence.

In an example, information about one sub-slot may be carried in a plurality of requests.

In another example, one request may also carry information about a plurality of sub-slots. For example, one request may carry information about two sub-slots. For another example, one request may carry information about all sub-slots occupied by a fine-grain service. Details are not described herein. If one request is used to carry the information about all the sub-slots occupied by the fine-grain service, full slots negotiation for the fine-grain service can be implemented by using one request, and efficiency of the full slots negotiation can be effectively improved.

During full slots negotiation, if one request carries information about a plurality of sub-slots, a full negotiation process is similar to that in the method 100 or the method 200. For example, a transmit end performs full slots negotiation with a receive end by using a plurality of requests, and at least one of the plurality of requests carries information about a plurality of sub-slots. In this case, for a full slots negotiation process, refer to the method 100, but a request 1 or a request 2 includes information about a plurality of sub-slots. In this case, a sub-slot ID field of a base frame overhead carrying the request 1 may carry IDs of the plurality of sub-slots, or a sub-slot ID field of a base frame overhead carrying the request 2 may carry IDs of the plurality of sub-slots. For another example, a transmit end performs full slots negotiation with a receive end by using one request. In this case, for a full slots negotiation process, refer to the method 200, but a request 1 includes information about all sub-slots occupied by a fine-grain service. In this case, a sub-slot ID field of a base frame overhead carrying the request 1 may carry IDs of all the sub-slots occupied by the fine-grain service.

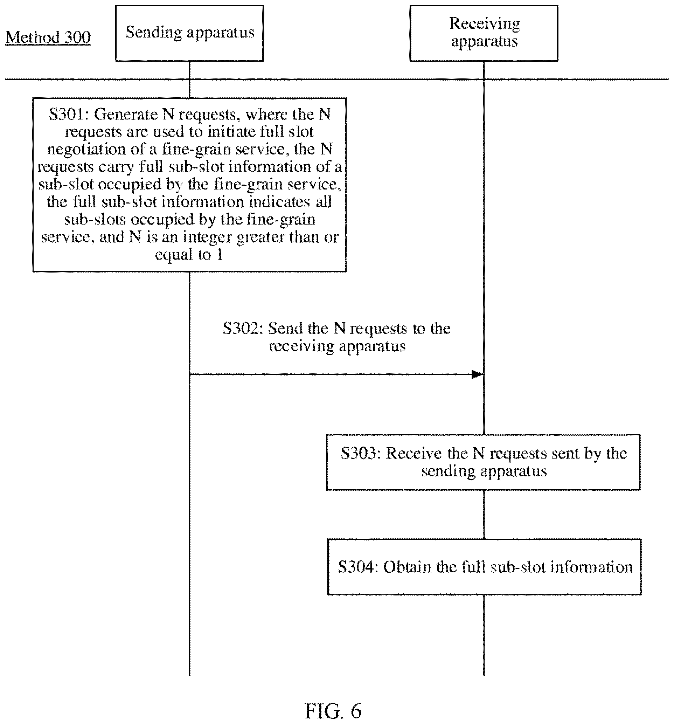

An embodiment of this application further provides a slot negotiation method 300 for a fine-grain service in a flexible Ethernet FlexE. FIG. 6 is a signaling interaction diagram of another slot negotiation method for a fine-grain service in a FlexE according to an embodiment of this application.

The method 300 shown in FIG. 6 may be applied to the method 100 and the method 200. A sending apparatus in the method 300 may correspond to the transmit end in the method 100 or the method 200, and a receiving apparatus in the method 300 may correspond to the receive end in the method 100 or the method 200.

An apparatus (for example, the sending apparatus or the receiving apparatus) mentioned in this embodiment of this application may be a network device, for example, a switch or a router; may be some components on the network device, for example, a board or a line card on the network device; may be a functional module on the network device; or may be a chip configured to implement the method in this application. This is not specifically limited in this embodiment of this application. The apparatuses may be, for example, but not limited to, directly connected through an Ethernet cable or an optical cable.

The method 300 may include the following S301 to S304.

S301: The sending apparatus generates N requests, where the N requests are used to initiate full slots negotiation of the fine-grain service, the N requests carry full sub-slot information of a sub-slot occupied by the fine-grain service, the full sub-slot information indicates all sub-slots occupied by the fine-grain service, and N is an integer greater than or equal to 1.

S302: The sending apparatus sends the N requests to the receiving apparatus.

S303: The receiving apparatus receives the N requests sent by the sending apparatus.

S304: The receiving apparatus obtains the full sub-slot information.

When the method 300 is applied to the method 100, a value of N is 2, and the N requests correspond to the request 1 and the request 2 in the method 100.

When the method 300 is applied to the method 200, a value of N is 1, and the N requests correspond to the request 1 in the method 100.

In a possible implementation, the N requests include a first request, the first request includes first sub-slot information, the first sub-slot information indicates a first sub-slot occupied by the fine-grain service, all the sub-slots include the first sub-slot, and the full sub-slot information includes the first sub-slot information.

In an example, when the method is applied to the method 100, the first request may correspond to the request 1 in the method 100. Correspondingly, the first sub-slot information may correspond to the sub-slot information 1 in the method 100, and the first sub-slot may correspond to the sub-slot 1 in the method 100.

In an example, when the method is applied to the method 100, the first request may correspond to the request 2 in the method 100. Correspondingly, the first sub-slot information may correspond to the sub-slot information 2 in the method 100, and the first sub-slot may correspond to the sub-slot 2 in the method 100.

In an example, when the method is applied to the method 200, the first request may correspond to the request 1 in the method 200. Correspondingly, the first sub-slot information may correspond to the sub-slot information 1 in the method 200, and the first sub-slot may correspond to the sub-slot 1 in the method 200.

In a possible implementation, the first request is carried in a first base frame overhead corresponding to the fine-grain service.

When the method 300 is applied to the method 100, the first base frame overhead corresponds to the base frame overhead 1 in the method 100.

When the method 300 is applied to the method 200, the first base frame overhead corresponds to the base frame overhead 1 in the method 200.

In a possible implementation, the first request includes first indication information, and the first indication information indicates that the first request is a full slots negotiation request for the fine-grain service.

When the method 300 is applied to the method 100, the first indication information corresponds to the indication information 1 in the method 100.

When the method 300 is applied to the method 200, the first indication information corresponds to the indication information 1 in the method 200.

In a possible implementation, the first indication information is carried in a first field of the first base frame overhead corresponding to the fine-grain service, and the first field includes one or more of an operation code field, a reserved field, or a GCC field.

When the method 300 is applied to the method 100, the first field corresponds to the field 1 in the method 100.

When the method 300 is applied to the method 200, the first field corresponds to the field 1 in the method 200.

In a possible implementation, the first request includes second indication information, and the second indication information indicates that the first request is not a last request in the N requests.

When the method 300 is applied to the method 100, and the first request corresponds to the request 1 in the method 100, the second indication information corresponds to the indication information 2 in the method 100.

In a possible implementation, the second indication information is carried in a second field of the first base frame overhead corresponding to the fine-grain service, and the second field includes an LE field, the reserved field, or the GCC field.

The second field may correspond to the field 2 in the method 100.

In a possible implementation, the first request includes third indication information, and the third indication information indicates that the first request is a last request in the N requests.

When the method 300 is applied to the method 100, and the first request corresponds to the request 2 in the method 100, the third indication information corresponds to the indication information 3 in the method 100.

When the method 300 is applied to the method 200, the third indication information corresponds to the indication information 3 in the method 200.

In a possible implementation, the third indication information is carried in a third field of the first base frame overhead corresponding to the fine-grain service, and the third field includes an LE field, the reserved field, or the GCC field.

When the method 300 is applied to the method 100, the third field corresponds to the field 3 in the method 100.

When the method 300 is applied to the method 200, the third field corresponds to the field 3 in the method 200.

In a possible implementation, the first request includes a quantity of slots, and the quantity of slots indicates a quantity of all the sub-slots.

In a possible implementation, the first sub-slot information includes a client identifier and a first sub-slot identifier, the client identifier is used to identify the fine-grain service, and the first sub-slot identifier is used to identify the first sub-slot occupied by the fine-grain service.

When the method 300 is applied to the method 100, the client identifier corresponds to the client ID 1 in the method 100, and the first sub-slot identifier corresponds to the identifier of the sub-slot 1 in the method 100.

When the method 300 is applied to the method 200, the client identifier corresponds to the client ID 1 in the method 200, and the first sub-slot identifier corresponds to the identifier of the sub-slot 1 in the method 200.

In a possible implementation, the N requests include a second request, the second request includes second sub-slot information, the second sub-slot information is used to identify a second sub-slot occupied by the fine-grain service, all the sub-slots include the second sub-slot, and the full sub-slot information includes the second sub-slot information.

In an example, when the method 300 is applied to the method 100, if the first request corresponds to the request 1, the second request may correspond to the request 2. In this case, the second sub-slot information may correspond to the sub-slot information 2 in the method 100, and the second sub-slot corresponds to the sub-slot 2 in the method 100.

In an example, when the method 300 is applied to the method 100, if the first request corresponds to the request 2, the second request may correspond to the request 1. In this case, the second sub-slot information may correspond to the sub-slot information 1 in the method 100, and the second sub-slot corresponds to the sub-slot 1 in the method 100.

In a possible implementation, the second sub-slot information includes the client identifier and a second sub-slot identifier, and the second sub-slot identifier is used to identify the second sub-slot occupied by the fine-grain service.

In an example, if the second sub-slot information corresponds to the sub-slot information 2 in the method 100, the second sub-slot identifier may correspond to the identifier of the sub-slot 2 in the method 100, and the client identifier corresponds to the client ID 1 in the method 100.

In an example, if the second sub-slot information corresponds to the sub-slot information 1 in the method 100, the second sub-slot identifier may correspond to the identifier of the sub-slot 1 in the method 100, and the client identifier corresponds to the client ID 1 in the method 100.

In a possible implementation, the method further includes: The receiving apparatus sends a response for the N requests to the sending apparatus. Correspondingly, the sending apparatus receives the response that is sent by the receiving apparatus and that is for the N requests.

The response mentioned herein may correspond to the response in the method 100 or the method 200.

In a possible implementation, the response is carried in a second base frame overhead corresponding to the fine-grain service.

When the method 300 is applied to the method 100, the second base frame overhead may correspond to the base frame overhead 3 in the method 100.

In a possible implementation, the response includes fourth indication information, and the fourth indication information indicates that the response is a response for the full slots negotiation.

The indication information mentioned herein may correspond to the indication information 4 in the method 100.

In a possible implementation, the fourth indication information is carried in a fourth field of the second base frame overhead corresponding to the fine-grain service, and the fourth field includes one or more of an operation code field, a reserved field, or a GCC field.

The fourth field mentioned herein may correspond to the field 4 in the method 100.

In a possible implementation, that the sending apparatus receives the response sent by the receiving apparatus includes: receiving the response after sending the last request in the N requests to the receiving apparatus. Correspondingly, that the receiving apparatus sends a response for the N requests to the sending apparatus includes: sending the response after receiving the last request in the N requests.

In a possible implementation, the method further includes: After receiving the response, the sending apparatus sends fifth indication information to the receiving apparatus, where the fifth indication information indicates that the full slots negotiation takes effect. Correspondingly, the receiving apparatus may receive the fifth indication information sent by the sending apparatus.

When the method 300 is applied to the method 100, the fifth indication information mentioned herein may correspond to the slot negotiation effective indication information in the method 100.

When the method 300 is applied to the method 200, the fifth indication information mentioned herein may correspond to the slot negotiation effective indication information in the method 200.

In a possible implementation, the fifth indication information is carried in a third base frame overhead corresponding to the fine-grain service.

The third base frame overhead mentioned herein may correspond to the base frame overhead 4 in the method 100.

In a possible implementation, the fifth indication information is carried in a fifth field of the third base frame overhead corresponding to the fine-grain service, and the fifth field includes one or more of an operation code field, a reserved field, or a GCC field.

The fifth field mentioned herein may correspond to the field 5 in the method 100.

In a possible implementation, the total quantity of all the sub-slots occupied by the fine-grain service is N.

In a possible implementation, the total quantity of all the sub-slots occupied by the fine-grain service is greater than N.

For a specific implementation of the method 300, refer to the foregoing description part of the method 100 or the method 200. Details are not described herein again.

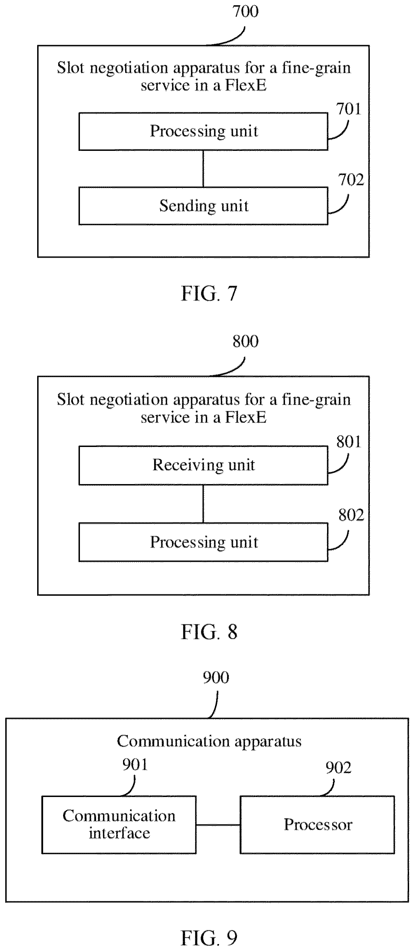

An embodiment of this application further provides a slot negotiation apparatus for a fine-grain service in a flexible Ethernet FlexE. FIG. 7 is a schematic diagram of a structure of a slot negotiation apparatus for a fine-grain service in a FlexE according to an embodiment of this application. The apparatus 700 shown in FIG. 7 may be used in a sending apparatus.

In an example, the apparatus 700 may be configured to perform the steps performed by the transmit end in the method 100. In another example, the apparatus 700 may be configured to perform the steps performed by the transmit end in the method 200. In still another example, the apparatus 700 may be configured to perform the steps performed by the sending apparatus in the method 300.

The apparatus 700 includes a processing unit 701 and a sending unit 702.

The processing unit 701 is configured to generate N requests, where the N requests are used to initiate full slots negotiation of the fine-grain service, the N requests carry full sub-slot information of a sub-slot occupied by the fine-grain service, the full sub-slot information indicates all sub-slots occupied by the fine-grain service, and N is an integer greater than or equal to 1.

The sending unit 702 is configured to send the N requests to a receiving apparatus.

In a possible implementation, the N requests include a first request, the first request includes first sub-slot information, the first sub-slot information indicates a first sub-slot occupied by the fine-grain service, all the sub-slots include the first sub-slot, and the full sub-slot information includes the first sub-slot information.

In a possible implementation, the first request is carried in a first base frame overhead corresponding to the fine-grain service.

In a possible implementation, the first request includes first indication information, and the first indication information indicates that the first request is a full slots negotiation request for the fine-grain service.

In a possible implementation, the first indication information is carried in a first field of the first base frame overhead corresponding to the fine-grain service, and the first field includes one or more of an operation code field, a reserved field, or a GCC field.

In a possible implementation, the first request includes second indication information, and the second indication information indicates that the first request is not a last request in the N requests.

In a possible implementation, the second indication information is carried in a second field of the first base frame overhead corresponding to the fine-grain service, and the second field includes an LE field, the reserved field, or the GCC field.

In a possible implementation, the first request includes third indication information, and the third indication information indicates that the first request is a last request in the N requests.

In a possible implementation, the third indication information is carried in a third field of the first base frame overhead corresponding to the fine-grain service, and the third field includes an LE field, the reserved field, or the GCC field.

In a possible implementation, the first request includes a quantity of slots, and the quantity of slots indicates a quantity of all the sub-slots.

In a possible implementation, the first sub-slot information includes a client identifier and a first sub-slot identifier, the client identifier is used to identify the fine-grain service, and the first sub-slot identifier is used to identify the first sub-slot occupied by the fine-grain service.

In a possible implementation, the N requests include a second request, the second request includes second sub-slot information, the second sub-slot information is used to identify a second sub-slot occupied by the fine-grain service, all the sub-slots include the second sub-slot, and the full sub-slot information includes the second sub-slot information.

In a possible implementation, the second sub-slot information includes the client identifier and a second sub-slot identifier, and the second sub-slot identifier is used to identify the second sub-slot occupied by the fine-grain service.

In a possible implementation, the apparatus further includes a receiving unit, configured to receive a response that is sent by the receiving apparatus and that is for the N requests.

In a possible implementation, the response is carried in a second base frame overhead corresponding to the fine-grain service.

In a possible implementation, the response includes fourth indication information, and the fourth indication information indicates that the response is a response for the full slots negotiation.

In a possible implementation, the fourth indication information is carried in a fourth field of the second base frame overhead corresponding to the fine-grain service, and the fourth field includes one or more of an operation code field, a reserved field, or a GCC field.

In a possible implementation, the receiving unit is configured to receive the response after the last request in the N requests is sent to the receiving apparatus.

In a possible implementation, the sending unit 702 is further configured to: after the response is received, send fifth indication information to the receiving apparatus, where the fifth indication information indicates that the full slots negotiation takes effect.

In a possible implementation, the fifth indication information is carried in a third base frame overhead corresponding to the fine-grain service.

In a possible implementation, the fifth indication information is carried in a fifth field of the third base frame overhead corresponding to the fine-grain service, and the fifth field includes one or more of an operation code field, a reserved field, or a GCC field.

In a possible implementation, the total quantity of all the sub-slots occupied by the fine-grain service is N.

In a possible implementation, the total quantity of all the sub-slots occupied by the fine-grain service is greater than N.

An embodiment of this application further provides a slot negotiation apparatus for a fine-grain service in a flexible Ethernet FlexE. FIG. 8 is a schematic diagram of a structure of a slot negotiation apparatus for a fine-grain service in a FlexE according to an embodiment of this application. The apparatus 800 shown in FIG. 8 may be used in a receiving apparatus.

In an example, the apparatus 800 may be configured to perform the steps performed by the receive end in the method 100. In another example, the apparatus 800 may be configured to perform the steps performed by the receive end in the method 200. In still another example, the apparatus 800 may be configured to perform the steps performed by the receiving apparatus in the method 300.

The apparatus 800 may include a receiving unit 801 and a processing unit 802.

The receiving unit 801 is configured to receive N requests sent by a sending apparatus, where the N requests are used to initiate full slots negotiation of the fine-grain service, the N requests carry full sub-slot information of the fine-grain service, the full sub-slot information indicates all sub-slots occupied by the fine-grain service, and N is an integer greater than or equal to 1.

The processing unit 802 is configured to obtain the full sub-slot information.

In a possible implementation, the N requests include a first request, the first request includes first sub-slot information, the first sub-slot information indicates a first sub-slot occupied by the fine-grain service, all the sub-slots include the first sub-slot, and the full sub-slot information includes the first sub-slot information.

In a possible implementation, the first request is carried in a first base frame overhead corresponding to the fine-grain service.

In a possible implementation, the first request includes first indication information, and the first indication information indicates that the first request is a full slots negotiation request for the fine-grain service.

In a possible implementation, the first indication information is carried in a first field of the first base frame overhead corresponding to the fine-grain service, and the first field includes one or more of an operation code field, a reserved field, or a GCC field.

In a possible implementation, the first request includes second indication information, and the second indication information indicates that the first request is not a last request in the N requests.

In a possible implementation, the second indication information is carried in a second field of the first base frame overhead corresponding to the fine-grain service, and the second field includes an LE field, the reserved field, or the GCC field.

In a possible implementation, the first request includes third indication information, and the third indication information indicates that the first request is a last request in the N requests.

In a possible implementation, the third indication information is carried in a third field of the first base frame overhead corresponding to the fine-grain service, and the third field includes an LE field, the reserved field, or the GCC field.

In a possible implementation, the first request includes a quantity of slots, and the quantity of slots indicates a quantity of all the sub-slots.

In a possible implementation, the first sub-slot information includes a client identifier and a first sub-slot identifier, the client identifier is used to identify the fine-grain service, and the first sub-slot identifier is used to identify the first sub-slot occupied by the fine-grain service.

In a possible implementation, the N requests include a second request, the second request includes second sub-slot information, the second sub-slot information is used to identify a second sub-slot occupied by the fine-grain service, all the sub-slots include the second sub-slot, and the full sub-slot information includes the second sub-slot information.

In a possible implementation, the second sub-slot information includes the client identifier and a second sub-slot identifier, and the second sub-slot identifier is used to identify the second sub-slot occupied by the fine-grain service.

In a possible implementation, the apparatus further includes a sending unit, configured to send a response for the N requests to the sending apparatus.

In a possible implementation, the response is carried in a second base frame overhead corresponding to the fine-grain service.

In a possible implementation, the response includes fourth indication information, and the fourth indication information indicates that the response is a response for the full slots negotiation.

In a possible implementation, the fourth indication information is carried in a fourth field of the second base frame overhead corresponding to the fine-grain service, and the fourth field includes one or more of an operation code field, a reserved field, or a GCC field.

In a possible implementation, the sending unit is configured to send the response after the last request in the N requests is received.

In a possible implementation, the receiving unit 801 is further configured to: after the response is sent, receive fifth indication information sent by the sending apparatus, where the fifth indication information indicates that the full slots negotiation takes effect.

In a possible implementation, the fifth indication information is carried in a third base frame overhead corresponding to the fine-grain service.

In a possible implementation, the fifth indication information is carried in a fifth field of the third base frame overhead corresponding to the fine-grain service, and the fifth field includes one or more of an operation code field, a reserved field, or a GCC field.

In a possible implementation, the total quantity of all the sub-slots occupied by the fine-grain service is N.

In a possible implementation, the total quantity of all the sub-slots occupied by the fine-grain service is greater than N.

For specific implementations of the apparatus 700 and the apparatus 800, refer to the foregoing description parts of the method 100, the method 200, and the method 300. Details are not described herein again.

In addition, an embodiment of this application further provides a communication apparatus 900. FIG. 9 is a schematic diagram of a structure of a communication apparatus according to an embodiment of this application. The communication apparatus 900 includes a communication interface 901 and a processor 902 connected to the communication interface 901. The communication apparatus 900 may be configured to perform the method 100, the method 200, or the method 300 in the foregoing embodiments.

In an example, the communication apparatus 900 may perform the method 100 in the foregoing embodiments. When the communication apparatus 900 is configured to perform the method 100 in the foregoing embodiments, the communication apparatus 900 is equivalent to the transmit end in the method 100. The communication interface 901 is configured to perform sending and receiving operations performed by the transmit end in the method 100. The processor 902 is configured to perform an operation other than the sending and receiving operations performed by the transmit end in the method 100. For example, the processor 902 is configured to generate a request 1 and a request 2, where both the request 1 and the request 2 are used to initiate full slots negotiation of a fine-grain service, the request 1 includes sub-slot information 1, and the request 2 includes sub-slot information 2; and the communication interface 901 is configured to send the request 1 and the request 2 to a receive end.

In an example, the communication apparatus 900 may perform the method 100 in the foregoing embodiments. When the communication apparatus 900 is configured to perform the method 100 in the foregoing embodiments, the communication apparatus 900 is equivalent to the receive end in the method 100. The communication interface 901 is configured to perform sending and receiving operations performed by the receive end in the method 100. The processor 902 is configured to perform an operation other than the sending and receiving operations performed by the receive end in the method 100. For example, the communication interface 901 is configured to receive a request 1, and the processor 902 is configured to obtain sub-slot information 1 in the request 1.

In an example, the communication apparatus 900 may perform the method 200 in the foregoing embodiments. When the communication apparatus 900 is configured to perform the method 200 in the foregoing embodiments, the communication apparatus 900 is equivalent to the transmit end in the method 200. The communication interface 901 is configured to perform sending and receiving operations performed by the transmit end in the method 200. The processor 902 is configured to perform an operation other than the sending and receiving operations performed by the transmit end in the method 200. For example, the processor 902 is configured to generate a request 1, where the request 1 is used to initiate full slots negotiation of a fine-grain service, and the request 1 includes sub-slot information 1; and the communication interface 901 is configured to send the request 1 to a receive end.

In an example, the communication apparatus 900 may perform the method 200 in the foregoing embodiments. When the communication apparatus 900 is configured to perform the method 200 in the foregoing embodiments, the communication apparatus 900 is equivalent to the receive end in the method 200. The communication interface 901 is configured to perform sending and receiving operations performed by the receive end in the method 200. The processor 902 is configured to perform an operation other than the sending and receiving operations performed by the receive end in the method 200. For example, the communication interface 901 is configured to receive a request 1, and the processor 902 is configured to obtain sub-slot information 1 in the request 1.

In an example, the communication apparatus 900 may perform the method 300 in the foregoing embodiments. When the communication apparatus 900 is configured to perform the method 300 in the foregoing embodiments, the communication apparatus 900 is equivalent to the sending apparatus in the method 300. The communication interface 901 is configured to perform sending and receiving operations performed by the sending apparatus in the method 300. The processor 902 is configured to perform an operation other than the sending and receiving operations performed by the sending apparatus in the method 300. For example, the processor 902 is configured to generate N requests, where the N requests are used to initiate full slots negotiation of a fine-grain service, the N requests carry full sub-slot information of a sub-slot occupied by the fine-grain service, the full sub-slot information indicates all sub-slots occupied by the fine-grain service, and N is an integer greater than or equal to 1; and the communication interface 901 is configured to send the N requests to a receiving apparatus.

In an example, the communication apparatus 900 may perform the method 300 in the foregoing embodiments. When the communication apparatus 900 is configured to perform the method 300 in the foregoing embodiments, the communication apparatus 900 is equivalent to the receiving apparatus in the method 300. The communication interface 901 is configured to perform sending and receiving operations performed by the receiving apparatus in the method 300. The processor 902 is configured to perform an operation other than the sending and receiving operations performed by the receiving apparatus in the method 300. For example, the communication interface 901 is configured to receive N requests, where the N requests are used to initiate full slots negotiation of a fine-grain service, the N requests carry full sub-slot information of a sub-slot occupied by the fine-grain service, the full sub-slot information indicates all sub-slots occupied by the fine-grain service, and N is an integer greater than or equal to 1; and the processor 902 is configured to obtain the full sub-slot information.

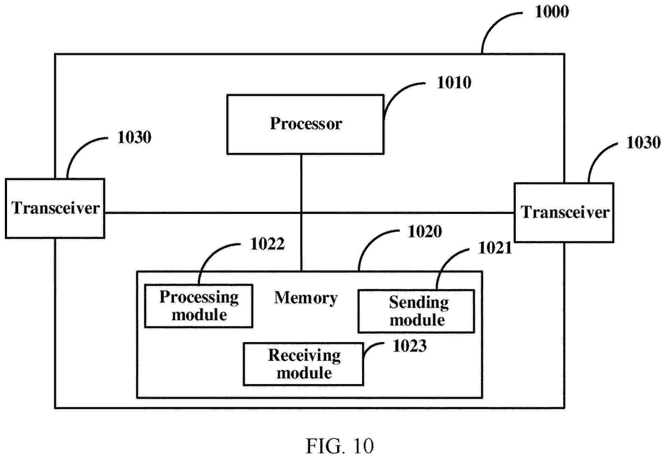

In addition, an embodiment of this application further provides a communication apparatus 1000. FIG. 10 is a schematic diagram of a structure of a communication apparatus according to an embodiment of this application. The communication apparatus 1000 may be configured to perform the method 100, the method 200, or the method 300 in the foregoing embodiments.

As shown in FIG. 10, the communication apparatus 1000 may include a processor 1010, a memory 1020 connected to the processor 1010 in a coupling manner, and a transceiver 1030. The transceiver 1030 may be, for example, a communication interface, an optical module, or the like. The processor 1010 may be a central processing unit (English: central processing unit, CPU for short), a network processor (English: network processor, NP for short), or a combination of the CPU and the NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field programmable gate array (English: field programmable gate array, FPGA for short), generic array logic (English: generic array logic, GAL for short), or any combination thereof. The processor 1010 may be one processor, or may include a plurality of processors. The memory 1020 may include a volatile memory (English: volatile memory), for example, a random access memory (English: random access memory, RAM for short); or the memory may include a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short). Alternatively, the memory 1020 may include a combination of the foregoing types of memories. The memory 1020 may be one memory, or may include a plurality of memories. In an implementation, the memory 1020 stores computer-readable instructions, and the computer-readable instructions include a plurality of software modules, for example, a sending module 1021, a processing module 1022, and a receiving module 1023. After executing each software module, the processor 1010 may perform a corresponding operation according to an indication of each software module. In this embodiment, an operation performed by a software module is actually an operation performed by the processor 1010 according to an indication of the software module.

In an example, the communication apparatus 1000 may perform the method 100 in the foregoing embodiments. When the communication apparatus 1000 is configured to perform the method 100 in the foregoing embodiments, the communication apparatus 1000 is equivalent to the transmit end in the method 100. The transceiver 1030 is configured to perform sending and receiving operations performed by the transmit end in the method 100. The processor 1010 is configured to perform an operation other than the sending and receiving operations performed by the transmit end in the method 100. For example, the processor 1010 is configured to generate a request 1 and a request 2, where both the request 1 and the request 2 are used to initiate full slots negotiation of a fine-grain service, the request 1 includes sub-slot information 1, and the request 2 includes sub-slot information 2; and the transceiver 1030 is configured to send the request 1 and the request 2 to a receive end.

In an example, the communication apparatus 1000 may perform the method 100 in the foregoing embodiments. When the communication apparatus 1000 is configured to perform the method 100 in the foregoing embodiments, the communication apparatus 1000 is equivalent to the receive end in the method 100. The transceiver 1030 is configured to perform sending and receiving operations performed by the receive end in the method 100. The processor 1010 is configured to perform an operation other than the sending and receiving operations performed by the receive end in the method 100. For example, the transceiver 1030 is configured to receive a request 1, and the processor 1010 is configured to obtain sub-slot information 1 in the request 1.

In an example, the communication apparatus 1000 may perform the method 200 in the foregoing embodiments. When the communication apparatus 1000 is configured to perform the method 200 in the foregoing embodiments, the communication apparatus 1000 is equivalent to the transmit end in the method 200. The transceiver 1030 is configured to perform sending and receiving operations performed by the transmit end in the method 200. The processor 1010 is configured to perform an operation other than the sending and receiving operations performed by the transmit end in the method 200. For example, the processor 1010 is configured to generate a request 1, where the request 1 is used to initiate full slots negotiation of a fine-grain service, and the request 1 includes sub-slot information 1; and the transceiver 1030 is configured to send the request 1 to a receive end.

In an example, the communication apparatus 1000 may perform the method 200 in the foregoing embodiments. When the communication apparatus 1000 is configured to perform the method 200 in the foregoing embodiments, the communication apparatus 1000 is equivalent to the receive end in the method 200. The transceiver 1030 is configured to perform sending and receiving operations performed by the receive end in the method 200. The processor 1010 is configured to perform an operation other than the sending and receiving operations performed by the receive end in the method 200. For example, the transceiver 1030 is configured to receive a request 1, and the processor 1010 is configured to obtain sub-slot information 1 in the request 1.

In an example, the communication apparatus 1000 may perform the method 300 in the foregoing embodiments. When the communication apparatus 1000 is configured to perform the method 300 in the foregoing embodiments, the communication apparatus 1000 is equivalent to the sending apparatus in the method 300. The transceiver 1030 is configured to perform sending and receiving operations performed by the sending apparatus in the method 300. The processor 1010 is configured to perform an operation other than the sending and receiving operations performed by the sending apparatus in the method 300. For example, the processor 1010 is configured to generate N requests, where the N requests are used to initiate full slots negotiation of a fine-grain service, the N requests carry full sub-slot information of a sub-slot occupied by the fine-grain service, the full sub-slot information indicates all sub-slots occupied by the fine-grain service, and N is an integer greater than or equal to 1; and the transceiver 1030 is configured to send the N requests to a receiving apparatus.

In an example, the communication apparatus 1000 may perform the method 300 in the foregoing embodiments. When the communication apparatus 1000 is configured to perform the method 300 in the foregoing embodiments, the communication apparatus 1000 is equivalent to the receiving apparatus in the method 300. The transceiver 1030 is configured to perform sending and receiving operations performed by the receiving apparatus in the method 300. The processor 1010 is configured to perform an operation other than the sending and receiving operations performed by the receiving apparatus in the method 300. For example, the transceiver 1030 is configured to receive N requests, where the N requests are used to initiate full slots negotiation of a fine-grain service, the N requests carry full sub-slot information of a sub-slot occupied by the fine-grain service, the full sub-slot information indicates all sub-slots occupied by the fine-grain service, and N is an integer greater than or equal to 1; and the processor 1010 is configured to obtain the full sub-slot information.

This application further provides a computer-readable storage medium. The computer-readable storage medium stores instructions. When the instructions are run on a computer, the computer is enabled to perform any one or more operations in the method (for example, the method 100, the method 200, or the method 300) described in the foregoing embodiments.

This application further provides a computer program product, including a computer program. When the computer program product runs on a computer, the computer is enabled to perform any one or more operations in the method (for example, the method 100, the method 200, or the method 300) described in the foregoing embodiments.

This application further provides a communication system, including the sending apparatus and the receiving apparatus mentioned in the foregoing embodiments.

This application further provides a communication system, including at least one memory and at least one processor. The at least one memory stores instructions, and the at least one processor executes the instructions, to enable the communication system to perform any one or more operations in the method (for example, the method 100, the method 200, or the method 300) in any one of the foregoing embodiments of this application.

In the specification, claims, and accompanying drawings of this application, the terms "first", "second", "third", "fourth", and the like (if existent) are intended to distinguish between similar objects but do not necessarily indicate a specific order or sequence. It should be understood that data termed in such a way may be interchangeable in proper circumstances, so that embodiments described herein can be implemented in an order other than the order illustrated or described herein. In addition, the terms "include" and "have" and any other variants thereof are intended to cover the non-exclusive inclusion. For example, a process, method, system, product, or device that includes a series of steps or units is not necessarily limited to those expressly listed steps or units, but may include other steps or units not expressly listed or inherent to the process, method, product, or device.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical service division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, service units in embodiments of this application may be integrated into one processing unit, each of the units may exist alone physically, or two or more units may be integrated into one unit. The integrated unit may be implemented in a form of hardware, or may be implemented in a form of a software service unit.

When the integrated unit is implemented in the form of the software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

Persons skilled in the art should be aware that in one or more of the foregoing examples, the services described in the present invention may be implemented by using hardware, software, firmware, or any combination thereof. When the software is used to implement the services, the services may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any usable medium accessible to a general-purpose or dedicated computer.

The objectives, technical solutions, and beneficial effect of the present invention are further described in detail in the foregoing specific implementations. It should be understood that the foregoing is merely specific implementations of the present invention.

In conclusion, the foregoing embodiments are merely intended to describe the technical solutions of this application, but not to limit this application. Although this application is described in detail with reference to the foregoing embodiments, persons of ordinary skill in the art should understand that they may still make modifications to the technical solutions recorded in the foregoing embodiments or make equivalent replacements to some technical features thereof, without departing from the scope of the technical solutions of embodiments of this application.

## Claims

1. A slot negotiation method for a fine-grain service in a flexible Ethernet FlexE, wherein the method is implemented by a sending apparatus, and the method comprises:
generating N requests, wherein the N requests are used to initiate full slots negotiation of the fine-grain service, the N requests carry full sub-slot information of a sub-slot occupied by the fine-grain service, the full sub-slot information indicates all sub-slots occupied by the fine-grain service, and N is an integer greater than or equal to 1; and
sending the N requests to a receiving apparatus.

2. The method according to claim 1, wherein the N requests comprise a first request, the first request comprises first sub-slot information, the first sub-slot information indicates a first sub-slot occupied by the fine-grain service, all the sub-slots comprise the first sub-slot, and the full sub-slot information comprises the first sub-slot information.

3. The method according to claim 2, wherein the first request is carried in a first base frame overhead corresponding to the fine-grain service.

4. The method according to claim 2 or 3, wherein the first request comprises first indication information, and the first indication information indicates that the first request is a full slots negotiation request for the fine-grain service.

5. The method according to claim 4, wherein the first indication information is carried in a first field of the first base frame overhead corresponding to the fine-grain service, and the first field comprises:
one or more of an operation code field, a reserved field, or a GCC field.

6. The method according to any one of claims 2 to 5, wherein the first request comprises second indication information, and the second indication information indicates that the first request is not a last request in the N requests.

7. The method according to claim 6, wherein the second indication information is carried in a second field of the first base frame overhead corresponding to the fine-grain service, and the second field comprises an LE field, the reserved field, or the GCC field.

8. The method according to any one of claims 2 to 5, wherein the first request comprises third indication information, and the third indication information indicates that the first request is a last request in the N requests.

9. The method according to claim 8, wherein the third indication information is carried in a third field of the first base frame overhead corresponding to the fine-grain service, and the third field comprises an LE field, the reserved field, or the GCC field.

10. The method according to any one of claims 2 to 9, wherein the first request comprises a quantity of slots, and the quantity of slots indicates a quantity of all the sub-slots.

11. The method according to any one of claims 2 to 10, wherein the first sub-slot information comprises a client identifier and a first sub-slot identifier, the client identifier is used to identify the fine-grain service, and the first sub-slot identifier is used to identify the first sub-slot occupied by the fine-grain service.

12. The method according to claim 11, wherein the N requests comprise a second request, the second request comprises second sub-slot information, the second sub-slot information is used to identify a second sub-slot occupied by the fine-grain service, all the sub-slots comprise the second sub-slot, and the full sub-slot information comprises the second sub-slot information.

13. The method according to claim 12, wherein the second sub-slot information comprises the client identifier and a second sub-slot identifier, and the second sub-slot identifier is used to identify the second sub-slot occupied by the fine-grain service.

14. The method according to any one of claims 1 to 13, wherein the method further comprises:
receiving a response that is sent by the receiving apparatus and that is for the N requests.

15. The method according to claim 14, wherein the response is carried in a second base frame overhead corresponding to the fine-grain service.

16. The method according to claim 14 or 15, wherein the response comprises fourth indication information, and the fourth indication information indicates that the response is a response for the full slots negotiation.

17. The method according to claim 16, wherein the fourth indication information is carried in a fourth field of the second base frame overhead corresponding to the fine-grain service, and the fourth field comprises:
one or more of an operation code field, a reserved field, or a GCC field.

18. The method according to any one of claims 14 to 17, wherein the receiving a response sent by the receiving apparatus comprises:
receiving the response after sending the last request in the N requests to the receiving apparatus.

19. The method according to any one of claims 14 to 18, wherein the method further comprises:
after receiving the response, sending fifth indication information to the receiving apparatus, wherein the fifth indication information indicates that the full slots negotiation takes effect.

20. The method according to claim 19, wherein the fifth indication information is carried in a third base frame overhead corresponding to the fine-grain service.

21. The method according to claim 19 or 20, wherein the fifth indication information is carried in a fifth field of the third base frame overhead corresponding to the fine-grain service, and the fifth field comprises:
one or more of an operation code field, a reserved field, or a GCC field.

22. The method according to any one of claims 1 to 21, wherein the total quantity of all the sub-slots occupied by the fine-grain service is N.

23. The method according to any one of claims 1 to 21, wherein the total quantity of all the sub-slots occupied by the fine-grain service is greater than N.

24. A slot negotiation method for a fine-grain service in a FlexE, wherein the method is implemented by a receiving apparatus, and the method comprises:
receiving N requests sent by a sending apparatus, wherein the N requests are used to initiate full slots negotiation of the fine-grain service, the N requests carry full sub-slot information of the fine-grain service, the full sub-slot information indicates all sub-slots occupied by the fine-grain service, and N is an integer greater than or equal to 1; and
obtaining the full sub-slot information.

25. The method according to claim 24, wherein the N requests comprise a first request, the first request comprises first sub-slot information, the first sub-slot information indicates a first sub-slot occupied by the fine-grain service, all the sub-slots comprise the first sub-slot, and the full sub-slot information comprises the first sub-slot information.

26. The method according to claim 25, wherein the first request is carried in a first base frame overhead corresponding to the fine-grain service.

27. The method according to claim 25 or 26, wherein the first request comprises first indication information, and the first indication information indicates that the first request is a full slots negotiation request for the fine-grain service.

28. The method according to claim 27, wherein the first indication information is carried in a first field of the first base frame overhead corresponding to the fine-grain service, and the first field comprises:
one or more of an operation code field, a reserved field, or a GCC field.

29. The method according to any one of claims 25 to 28, wherein the first request comprises second indication information, and the second indication information indicates that the first request is not a last request in the N requests.

30. The method according to claim 29, wherein the second indication information is carried in a second field of the first base frame overhead corresponding to the fine-grain service, and the second field comprises an LE field, the reserved field, or the GCC field.

31. The method according to any one of claims 25 to 28, wherein the first request comprises third indication information, and the third indication information indicates that the first request is a last request in the N requests.

32. The method according to claim 31, wherein the third indication information is carried in a third field of the first base frame overhead corresponding to the fine-grain service, and the third field comprises an LE field, the reserved field, or the GCC field.

33. The method according to any one of claims 25 to 32, wherein the first request comprises a quantity of slots, and the quantity of slots indicates a quantity of all the sub-slots.

34. The method according to any one of claims 25 to 33, wherein the first sub-slot information comprises a client identifier and a first sub-slot identifier, the client identifier is used to identify the fine-grain service, and the first sub-slot identifier is used to identify the first sub-slot occupied by the fine-grain service.

35. The method according to claim 34, wherein the N requests comprise a second request, the second request comprises second sub-slot information, the second sub-slot information is used to identify a second sub-slot occupied by the fine-grain service, all the sub-slots comprise the second sub-slot, and the full sub-slot information comprises the second sub-slot information.

36. The method according to claim 35, wherein the second sub-slot information comprises the client identifier and a second sub-slot identifier, and the second sub-slot identifier is used to identify the second sub-slot occupied by the fine-grain service.

37. The method according to any one of claims 24 to 36, wherein the method further comprises:
sending a response for the N requests to the sending apparatus.

38. The method according to claim 37, wherein the response is carried in a second base frame overhead corresponding to the fine-grain service.

39. The method according to claim 37 or 38, wherein the response comprises fourth indication information, and the fourth indication information indicates that the response is a response for the full slots negotiation.

40. The method according to claim 39, wherein the fourth indication information is carried in a fourth field of the second base frame overhead corresponding to the fine-grain service, and the fourth field comprises:
one or more of an operation code field, a reserved field, or a GCC field.

41. The method according to any one of claims 37 to 40, wherein the sending a response for the N requests to the sending apparatus comprises:
sending the response after receiving the last request in the N requests.

42. The method according to any one of claims 37 to 41, wherein the method further comprises:
after sending the response, receiving fifth indication information sent by the sending apparatus, wherein the fifth indication information indicates that the full slots negotiation takes effect.

43. The method according to claim 42, wherein the fifth indication information is carried in a third base frame overhead corresponding to the fine-grain service.

44. The method according to claim 42 or 43, wherein the fifth indication information is carried in a fifth field of the third base frame overhead corresponding to the fine-grain service, and the fifth field comprises:
one or more of an operation code field, a reserved field, or a GCC field.

45. The method according to any one of claims 24 to 44, wherein the total quantity of all the sub-slots occupied by the fine-grain service is N.

46. The method according to any one of claims 24 to 44, wherein the total quantity of all the sub-slots occupied by the fine-grain service is greater than N.

47. A slot negotiation apparatus for a fine-grain service in a FlexE, wherein the apparatus is used in a sending apparatus, and the apparatus comprises:
a processing unit, configured to generate N requests, wherein the N requests are used to initiate full slots negotiation of the fine-grain service, the N requests carry full sub-slot information of a sub-slot occupied by the fine-grain service, the full sub-slot information indicates all sub-slots occupied by the fine-grain service, and N is an integer greater than or equal to 1; and
a sending unit, configured to send the N requests to a receiving apparatus.

48. A slot negotiation apparatus for a fine-grain service in a FlexE, wherein the apparatus is used in a receiving apparatus, and the apparatus comprises:
a receiving unit, configured to receive N requests sent by a sending apparatus, wherein the N requests are used to initiate full slots negotiation of the fine-grain service, the N requests carry full sub-slot information of the fine-grain service, the full sub-slot information indicates all sub-slots occupied by the fine-grain service, and N is an integer greater than or equal to 1; and
a processing unit, configured to obtain the full sub-slot information.

49. A sending apparatus, comprising a processor and a memory, wherein
the memory is configured to store instructions or a computer program; and
the processor is configured to execute the instructions or the computer program, to enable the sending apparatus to perform the method according to any one of claims 1 to 23.

50. A receiving apparatus, comprising a processor and a memory, wherein
the memory is configured to store instructions or a computer program; and
the processor is configured to execute the instructions or the computer program, to enable the receiving apparatus to perform the method according to any one of claims 24 to 46.

51. A computer-readable storage medium, wherein when the computer-readable storage medium runs on a computer, the computer is enabled to perform the method according to any one of claims 1 to 46.

52. A communication system, wherein the communication system comprises:
a sending apparatus that performs the method according to any one of claims 1 to 23 and a receiving apparatus that performs the method according to any one of claims 24 to 46.

53. A computer program product, comprising a program, wherein when the program is run on a processor, the method according to any one of claims 1 to 46 is implemented.
